# EUROPÄISCHE PATENTSCHRIFT

(11) **EP 0 862 100 B1**
(45) Veröffentlichungstag und Bekanntmachung des Hinweises auf die Patenterteilung: **24.11.2004**
(21) Anmeldenummer: 98103120.6
(22) Anmeldetag: 23.02.1998
(51) Int. Cl.: G05B 19/07

(54) **Logisches Umschaltverfahren und Anordnung zu seiner Durchführung**
Logical switchover process and arrangement for performing the same
Procédé logique de commutation et dispositif pour sa mise en oeuvre

(30) Priorität: 26.02.1997 DE 19707693
(43) Veröffentlichungstag der Anmeldung: 02.09.1998
(73) Patentinhaber: Krieger, Heinrich, 80689 München (DE)
(72) Erfinder: Krieger, Heinrich, 80689 München (DE)

(56) Entgegenhaltungen:
- DE-A- 2 356 107
- DE-B- 1 276 786

## Beschreibung

Die Erfindung betrifft ein Verfahren und Anordnungen zum Ein-, Um- bzw. Ausschalten einer diskreten Menge von Zuständen eines Geräts. Solche Verfahren und Anordnungen sind in zahlreichen automatisierten Anlagen erforderlich, insbesondere wenn Drehstrommotoren zu schalten sind, wobei den zu schaltenden Zuständen jeweils eine Kombination Betriebsdrehzahl/Drehrichtung bzw. die Drehzahl des Stillstands, also die Drehzahl null, entspricht. Der Schaltbefehl erfolgt mittels eines befehlgebenden Systems, welches als Schaltelemente etwa Drucktaster aufweist oder etwa, wie in Portalroboter- und Aufzugsanlagen, Positionsschalter (etwa Bederke, H.-J., u.a., Elektrische Antriebe und Steuerungen, Stuttgart 1969, Seite 236). Die Schaltelemente des befehlgebenden Systems erzeugen jeweils eine logische Variable, welche der logischen Werte 0 und 1 fähig ist. Die Ausgangsvariablen des befehlgebenden Systems werden parallel zueinander abgerufen und von einem speichernden System gespeichert, welches, gegebenenfalls über eine kombinatorische logische Schaltung, die Schaltelemente eines Stellglied-Systems hält, welches den Motor schaltet.

Beim Schalten eines Drehstrommotors mittels Drucktastern entspricht einer Betriebsdrehzahl jeweils ein Drucktaster zum Einschalten der Betriebsdrehzahl und zum Umschalten auf diese Betriebsdrehzahl. Ein Drucktaster ist zum Ausschalten vorgesehen. Bei Betätigung eines Drucktasters wird ein Impuls von der Dauer des Tastendrucks erzeugt. Ein Impuls entspricht dem logischen Wert 1, das Ausbleiben des Impulses dem logischen Wert O. Bei Schützsteuerungen ist einer Betriebsdrehzahl jeweils eine Selbsthalteeinrichtung zugeordnet, welche bei einem Befehl zum Einschalten der Betriebsdrehzahl oder zum Umschalten auf die Betriebsdrehzahl gesetzt wird, wobei die den anderen Betriebsdrehzahlen zugeordneten Selbsthalteeinrichtungen gegebenenfalls verriegelt werden (etwa Lehmann, W., Geisweid, R., Die Elektrotechnik und die Elektrischen Antriebe, 6. Aufl., Berlin u.a. 1962, Seite 387).

Bei Wechselstrommotoren umfaßt das Stellglied-System gegebenenfalls einen Wechselrichter mit einem dazugehörigen fest- oder freiprogrammierbaren Steuergerät, welches eine für die zu schaltende Betriebsdrehzahl spezifische Impulsfolge zur Steuerung des Wechselrichters erzeugt, welche etwa bei Synchronmotoren die der Betriebsdrehzahl entsprechende Frequenz aufweist. Durch Festprogrammierung eines Programmierbaren Bausteins oder bei freiprogrammierbaren Steuergeräten durch Einlesen eines Programms können Impulsfolgen für eine diskrete Menge von Betriebsdrehzahlen vorbereitet und zugänglich gemacht werden, deren Auswahl durch Eingangsvariable des Steuergeräts, also des Stellglied-Systems erfolgt. Das erfindungsgemäße Verfahren oder eine erfindungsgemäße Gatterschaltung kann beim Durchlaufen von Anweisungen eines eingelesenen Programms mittels der Schaltelemente eines Rechners realisiert werden.

Allgemein besteht ein Motorzustand aus einer Kombination Drehzahl/Drehrichtung bzw. aus der Drehzahl null. Die Drehzahlen bilden allgemein eine kontinuierliche Menge, während die Betriebsdrehzahlen zusammen mit der Drehzahl null eine diskrete Menge bilden. Damit bilden die Motorzustände allgemein eine kontinuierliche Menge, während die zu schaltenden Motorzustände eine diskrete Menge bilden.

Ein Betriebszustand besteht aus einer Kombination eines Motorzustands mit Betriebsdrehzahl und einem Schaltzustand des Stellglied-Systems, durch welchen der Motorzustand verweilend geschaltet werden kann. Eine Kombination eines Motorzustands und eines Schaltzustands des Stellglied-Systems wird im Folgenden als Zwischenzustand bezeichnet, wenn bei Erreichen der Drehzahl des Motorzustands als Zwischendrehzahl der Schaltzustand des Stellglied-Systems durch Weiterschalten des Stellglied-Systems geändert wird. Eine Betriebsdrehzahl kann Zwischendrehzahl sein. Ein Betriebszustand kann Zwischenzustand sein.

Hinsichtlich des Einschaltens, also des Anlassens eines Drehstrommotors ist es bekannt, über einen Zwischenzustand zwischenzuschalten. Beim 2-stufigen Stern-Dreieckanlassen wird in der ersten Stufe, d.h. der Zwischenstufe, zunächst zur Herbeiführung der Anlassdrehzahl als Zwischendrehzahl der Stern geschaltet und ein anzugverzögertes Zeitrelais gesetzt, dessen Verzögerungszeit so bemessen ist, daß sich während ihres Ablaufs die Drehzahl, ausgehend vom Stillstand, bis zur Anlassdrehzahl mit hinlänglicher Annäherung erhöht. Beim Schalten des Zeitrelais, also beim Erreichen der Anlassdrehzahl, wird in der zweiten Stufe, d.h. der Endstufe, mittels der Ausgangsvariablen des Zeitrelais als Freigabevariabler durch Weiterschalten des Stellglied-Systems das Dreieck geschaltet. Der Zwischenzustand besteht also aus der Kombination des Motorzustands mit der Anlassdrehzahl und dem Schaltzustand des Stellglied-Systems, durch welchen der Stern geschaltet wird. Die Ausgangsvariable des Zeitrelais ist über einen Öffner und einen Schließer, welche einen Wechsler bilden, Eingangsvariable einer kombinatorischen logischen Schaltung, deren Ausgangesvariable über das Stern- und das Dreieckschütz abgerufen werden. Bei Schalten des Zeitrelais wird der Wechsler betätigt und dadurch der Stern ab- und das Dreieck zugeschaltet. (etwa Lehmann, W., Geisweid, R., a.a.O., Seite 386).

Auch hinsichtlich des Ausschaltens, also des Bremsens eines Drehstrommotors ist es bekannt, über einen Zwischenzustand zwischenzuschalten. Beim Gegenstrombremsen wird in der ersten, d.h. in der Zwischenstufe, zunächst zur Herbeiführung der Drehzahl null als Zwischendrehzahl ein Schaltzustand des Stellglied-Systems geschaltet, welcher bei verweilender Schaltung einen Motorzustand mit der zur Drehrichtung des Ausgangszustands entgegengesetzten Drehrichtung herbeiführen würde. Das hinlänglich angenäherte Erreichen der Drehzahl null wird durch einen als Bremswächter eingesetzten Drehzahlsensor angezeigt. Beim Erreichen der Drehzahl null, also beim Schalten des Bremswächters wird in der zweiten Stufe, d.h. der Endstufe, mittels der Ausgangsvariablen des Bremswächters als Freigabevariabler der Schaltzustand des Stellglied-Systems geschaltet, welcher bei verweilender Schaltung dem Stillstand entspricht, worauf sich der Leerlauf und schließlich der Stillstand einstellt (etwa Lehmann, W., Geisweis, R., a.a.O., Seite 388).

Für die Reversierung eines Drehstrommotors, d.h. das Umschalten auf einen Zustand mit der zur Drehrichtung des bestehenden Zustands entgegengesetzten Drehrichtung, ist ein Verfahren gebräuchlich, welches eine Kombination von Gegenstrombremsung und Stern-Dreieckanlassen darstellt (Stern-Dreieckreversierung).

Durch das Stern-Dreieckanlassen wird eine Verkleinerung von Anlasstrom und Anlassmoment erreicht. Beim Gegenstrombremsen wird durch die Sternschaltung als Bremsschaltung oder durch die Dreieckschaltung als Bremsschaltung, wobei der Motor über Vorschaltwiderstände ans Netz gelegt wird, eine Verkleinerung des Bremsmoments erreicht. Darüberhinaus ist es wünschenswert, weitere, aus den Eigenschaften der Motoren sich ergebende Vorgaben zu berücksichtigen. So ist es z.B. zweckmäßig, beim Umschalten von einem bestehenden Betriebszustand auf einen herbeizuführenden Betriebszustand mit derselben Drehrichtung über eine oder mehrere anderen Betriebszuständen entsprechende Betriebsdrehzahlen hinweg, über diese Betriebszustände als Zwischenzustände zwischenzuschalten und dabei zur Verkleinerung von Drehmomenten jeweils das hinlängliche Erreichen der entsprechenden Betriebsdrehzahl als Zwischendrehzahl vor dem Weiterschalten abzuwarten. Ebenso ist es zweckmäßig, nach dem Umschalten von einem bestehenden auf einen herbeizuführenden Betriebszustand mit derselben Drehrichtung nur dann auf einen Betriebszustand derselben Drehrichtung und noch größerer bzw. noch kleinerer Drehzahl durch Umschaltbefehl umzuschalten, wenn die zunächst herbeizuführende Drehzahl hinlänglich erreicht ist, wodurch überhöhte Drehmomente vermieden werden.

Es ist ein Verfahren und eine Anordnung zum Schalten eines polumschaltbaren Drehstrommotors mit Dahlanderwicklung mit zwei Drehzahlen derselben Drehrichtung bekannt (FANAL-Schaltungspraxis, 5. Aufl., Wuppertal 1971, Seite 158 - 159), wobei durch Tastendruck die hohe Drehzahl über die niedere Drehzahl selbsttätig eingeschaltet werden kann und wobei vor dem Weiterschalten das hinlängliche Erreichen der niederen Drehzahl abgewartet wird, die ihrerseits durch Stern-Dreieckanlassen herbeigeführt wird. Aber der Umstand, daß nach der manuellen Einschaltung der niederen Drehzahl erst dann manuell auf die hohe Drehzahl umgeschaltet werden sollte, wenn die niedere Drehzahl hinlänglich erreicht ist, wird nicht berücksichtigt, was zu überhöhten Drehmomenten führen kann.

Dementsprechend ist es Aufgabe der Erfindung, ein selbsttätiges Verfahren zum Ein- Um- und Auschalten eines Geräts mit einer diskreten Menge von Zuständen anzugeben, welches es erlaubt, aus den Eigenschaften des Geräts sich ergebende Vorgaben zu berücksichtigen und welches allgemein anwendbar ist.

Diese Aufgabe wird durch ein Verfahren nach Anspruch 1 und in Ausgestaltung für das Einschalten nach Anspruch 2 und 3, für das Umschalten nach Anspruch 4 und 5, für das Ausschalten nach Anspruch 6 und 7 und durch Anordnungen zum Einschalten nach Anspruch 8 und 9 und zum Umschalten nach Anspruch 10 und 11 gelöst.

Im Folgenden werden zwei Anwendungspeispiele für die Erfindung an Hand der Zeichnungen erläutert. Das erste Anwendungsbeispiel zeigt eine Schaltung mit Wegeschaltelementen für einen Drehstrommotor mit Dahlanderwicklung und zwei Drehzahlen jeweils beider Drehrichtungen. Das zweite Anwendungsbeispiel zeigt eine Gatterschaltung für einen wechselrichtergespeisten Drehstrommotor mit drei Drehzahlen gleicher Drehrichtung.

Für das erste Anwendungsbeispiel zeigt Fig. 1 das befehlgebende System (Drucktaster) und das speichernde System. Fig. 2 zeigt einen Teil der kombinatorischen logischen Schaltung, Fig. 3 die Schaltung der Zeitrelais und Drehzahlsensoren, Fig. 4 den weiteren Teil der kombinatorschen logischen Schaltung und das Stellglied-System mit dem Motor. Die Fig. 5a, 5b und 5c zeigen die Wicklungspläne des Motors. Für das zweite Anwendungbeispiel zeigt Fig. 6 das speichernde System und Fig. 7 die kombinatorische logische Schaltung, die Schaltung der Zeitschaltelemente, das Stellglied-System und den Motor, hier im Dreieck geschaltet.

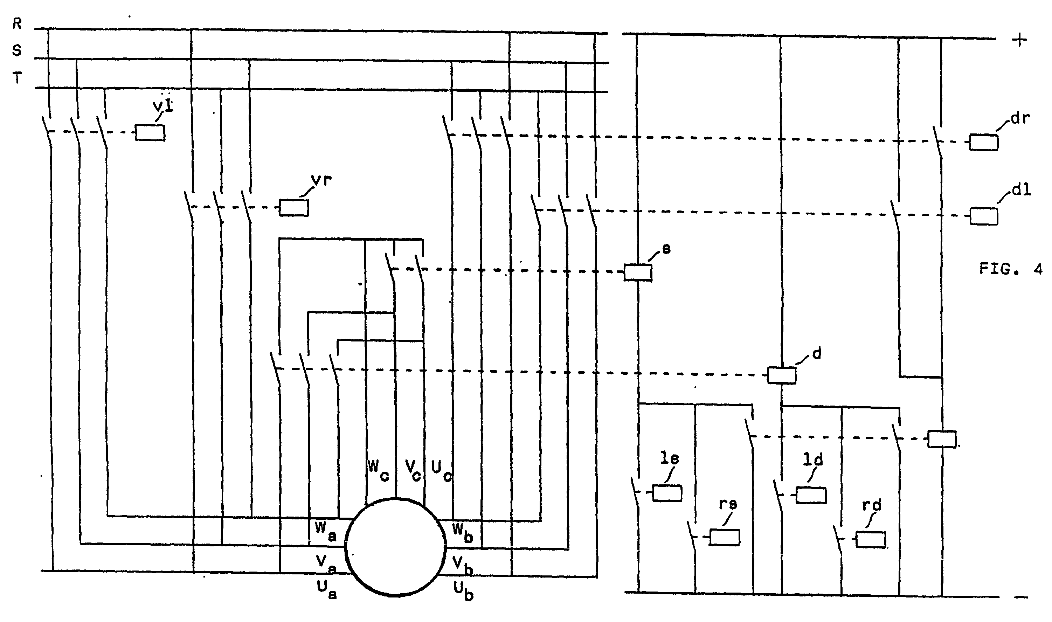

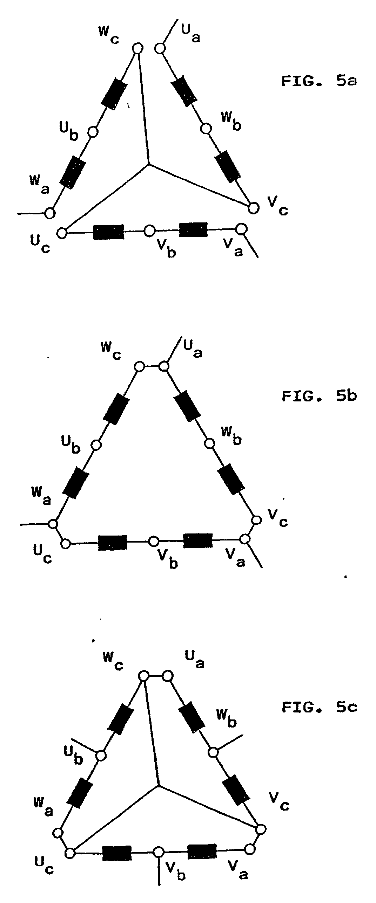

Im ersten Anwendungspeispiel hat der Motor entsprechend der Fig. 5a (Sternschaltung), der Fig. 5b (Dreieckschaltung) und der Fig. 5c (Dahlander- oder Doppelsternschaltung) 9 Klemmen: Uₐ, Vₐ, Wₐ; U_{b}, V_{b}, W_{b}; U_{c}, V_{c}, W_{c}. Die Tabelle 1 ist die Klemmentabelle des Motors, welche angibt, wie für die Schaltungen des Motors die Klemmen untereinander bzw. mit den Phasen des Drehstroms zu verbinden sind. Das Stellglied-System umfaßt das Dahlenderschütz für Linkslauf dl, das Dahlanderschütz für Rechtslauf dr, das Langsamschütz für Linkslauf vl, das Langsamschütz für Rechtslauf vr, das Sternschütz s und das Dreieckschütz d. Tabelle 2 ist die Logiktabelle für das Stellglied-System, welche für die Motorschaltungen jeweils den Schaltzustand des Stellglied-Systems angibt. Der logische Wert 1 entspricht dem angezogenen Schütz, der logische Wert 0 dem abgefallenen. Wenn ein Dahlanderschütz angezogen ist, dann ist das Sternschütz und das Dreieckschütz angezogen. Wenn ein Langsamschütz angezogen ist, dann ist das Sternschütz angezogen und das Dreieckschütz abgefallen oder das Sternschütz abgefallen und das Dreieckschütz angezogen. Hieraus ergibt sich an Hand der Logiktabelle (Tabelle 3) die in Fig. 4 gezeigt kombinatorsche logische Schaltung, wobei für die niedere Drehzahl bei Linkslauf/Dreieckschaltung das Schütz ld, bei Linkslauf/Sternschaltung das Schütz ls, bei Rechtslauf/Dreieckschaltung das Schütz rd, bei Rechtslauf/Sternschaltung das Schütz rs angezogen ist.

Wenn die Drehrichtung als Vorzeichen der Drehzahl genommen wird, bilden die Betriebsdrehzahlen zusammen mit der Drehzahl null des Stillstands eine serielle Anordnung: d₋₂, d₋₁, d₀, d₊₁, d₊₂ mit d₀ = 0, d₋₂= - d₊₂, d₋₁ = d₊₁. Negative Indizes bedeuten Linkslauf, positive Indizes bedeuten Rechtslauf. d₋₂, d₋₁, d₀, d₊₁ und d₊₂ sind die zu schaltenden diskreten Zustände des Motors.
Die den Motorschaltungen entsprechenden Schaltzustände des Stellglied-Systems seien wie folgt bezeichnet:

| | |
|---|---|
| Linkslauf/Dahlanderschaltung | Zs₋₂ |
| Linkslauf/Dreieckschaltung | Zs₋₁ |
| Linkslauf/Sternschaltung | Zsl |
| Stillstand | Zs₀ |
| Rechtslauf/Sternschaltung | Zsr |
| Rechtslauf/Dreieckschaltung | Zs₊₁ |
| Rechtslauf/Dahlanderschaltung | Zs₊₂ |

Eine Kombination Motorzustand/Schaltzustand des Stellgliedsystems wird im Folgenden als Zustand bezeichnet.

Die zu berücksichtigenden, aus den Eigenschaften des Motors sich ergebenden Vorgaben, seien die Folgenden: (Zustände, welche durch das Weiterschalten bei Erreichen eines Zwischenzustands entstehen, werden in dieser Aufstellung nicht aufgeführt)
Für das Einschalten in aufsteigender Richtung der seriellen Anordnung der Motorzustände:
Einschalten des Zustands d₊₁ (Umschalten von d₀ auf d₊₁):

| | | |
|---|---|---|
| 2-stufig | Ausgangszustand | d₀/Zs₀ |
| | Zwischenzustand | dr/Zsr |
| | Endzustand | d₊₁/Zs₊₁ |
| | (Stern-Dreieckanlassen) | |

Einschalten des Zustands d₊₂ (Umschalten von d₀ auf d₊₂):

| | | |
|---|---|---|
| 3-stufig | Ausgangszustand | d₀/Zs₀ |
| | 1. Zwischenzustand | dr/Zsr |
| | 2. Zwischenzustand | d₊₁/Zs₊₁ |
| | Endzustand | d₊₂/Zs₊₂ |
| | (1. und 2. Stufe: Stern-Dreieckanlassen) | |

Die Vorgaben für das Einschalten in absteigender Richtung der seriellen Anordnung der Motorzustände seien die analogen.
Für das Umschalten in aufsteigender Richtung der seriellen Anordnung der Motorzustände:
Umschalten von d₋₂ auf d₋₁:

| | | |
|---|---|---|
| 1-stufig | Ausgangszustand | d₋₂/Zs₋₂ |
| | Endzustand | d₋₁/Zs₋₁ |

Umschalten von d₋₂ auf d₊₁:

| | | |
|---|---|---|
| 3-stufig | Ausgangszustand | d₋₂/Zs₋₂ |
| | 1. Zwischenzustand | d₋₁/Zs₋₁ |
| | 2. Zwischenzustand | dr/Zsr |
| | Endzustand | d₊₁/Zs₊₁ |
| | (2. und 3. Stufe: Stern-Dreieckreversierung) | |

Umschalten von d₋₂ auf d₊₂:

| | | |
|---|---|---|
| 4-stufig | Ausgangszustand | d₋₂/Zs₋₂ |
| | 1. Zwischenzustand | d₋₁/Zs₋₁ |
| | 2. Zwischenzustand | dr/Zsr |
| | 3. Zwischenzustand | d₊₁/Zs₊₁ |
| | Endzustand | d₊₂/Zs₊₂ |
| | (2. und 3. Stufe: Stern-Dreieckreversierung) | |

Umschalten von d₋₁ auf d₊₁:

| | | |
|---|---|---|
| 2-stufig | Ausgangszustand | d₋₁/Zs₋₁ |
| | Zwischenzustand | dr/Zsr |
| | Endzustand | d₊₁/Zs₊₁ |
| | (Stern-Dreieckreversierung) | |

Umschalten von d₋₁ auf d₊₂:

| | | |
|---|---|---|
| 3-stufig | Ausgangszustand | d₋₁/Zs₋₁ |
| | 1. Zwischenzustand | dr/Zsr |
| | 2. Zwischenzustand | d₊₁/Zs₊₁ |
| | Endzustand | d₊₂/Zs₊₂ |
| | (1. und 2. Stufe: Stern-Dreieckreversierung) | |

Umschalten von d₊₁ auf d₊₂:

| | | |
|---|---|---|
| 1-stufig | Ausgangszustand | d₊₁/Zs₊₁ |
| | Endzustand | d₊₂/Zs₊₂ |

Die Vorgaben für das Umschalten in absteigender Richtung der seriellen Anordnung der Motorzustände seien die analogen.
Für das Ausschalten in aufsteigender Richtung der seriellen Anordnung der Motorzustände:
Ausschalten von d₋₂ (Umschalten von d₋₂ auf d₀):

| | | |
|---|---|---|
| 3-stufig | Ausgangszustand | d₋₂/Zs₋₂ |
| | 1. Zwischenzustand | d₋₁/Zs₋₁ |
| | 2. Zwischenzustand | d₀/Zsr |
| | Endzustand | d₀/Zs₀ |
| | (2. und 3. Stufe: Stern-Gegenstrombremsung) | |

Ausschalten von d₋₁ (Umschalten von d₋₁ auf d₀):

| | | |
|---|---|---|
| 2-stufig | Ausgangszustand | d₋₁/Zs₋₁ |
| | Zwischenzustand | dₒ/Zsr |
| | Endzustand | d₀/Zs₀ |
| | (Stern-Gegenstrombremsung) | |

Die Vorgaben für das Ausschalten in absteigender Richtung der seriellen Anordnung der Motorzustände seien die analogen.

Die Anlassdrehzahl beim Stern-Dreieckanlassen in aufsteigender Richtung der seriellen Anordnung der Motorzustände und die Drehzahl des Zwischenzustands bei der Stern-Dreieck-Reversierung in aufsteigender Richtung der seriellen Anordnung der Motorzustände sind als die gleichen vorgegeben angenommen (Zwischendrehzahl dr), analog für Stern-Dreieckanlassen und Stern-Dreieckreversierung in absteigender Richtung der seriellen Anordnung der Motorzustände (Zwischendrehzahl dl).

Das Ein-, Um- bzw. Ausschalten soll nur von einem beim vorhergehenden Aus-, Um- bzw. Einschalten als Endzustand hinlänglich erreichten Ausgangszustand aus möglich sein. Ebenso soll ein Weiterschalten nur von einem hinlänglich erreichten Zwischenzustand aus möglich sein. Demzufolge kann durch Bemessung der Verzögerungszeit des zu Beginn des Ein-, Um- bzw. Ausschaltens bzw. des Weiterschaltens gesetzten Zeitrelais das hinlängliche Erreichen des nächsten Zustands gesichert werden, welches zusätzlich durch einen Drehzahlsensor angezeigt werden soll.

Die Einschaltvorgänge in aufsteigender Richtung der seriellen Anordnung der Motorzustände verlaufen wie folgt:

### Einschalten von d₊₁:

### Ausgangszustand:

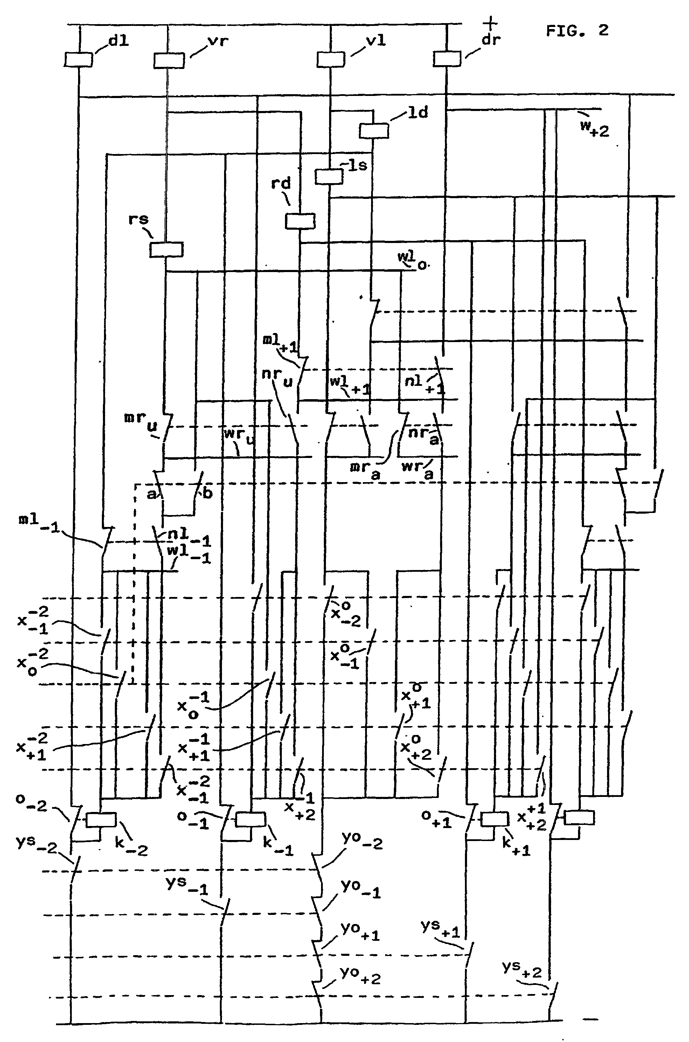

Im Ausgangszustand sind die Teil-Einrichtungen der zweiten speichernden Einrichtung, d.h. die Selbsthalteeinrichtungen y₋₂, y₋₁, y₊₁ und y₊₂ nicht gesetzt, so daß ihre über die Schützspulen y1₋₂, y1₋₁, y1₊₁ und y1₊₂ abgerufenen Ausgangsvariablen jeweils den logischen Wert 0 haben. Die Schließer ys₋₂, ys₋₁, Ys₊₁ und ys₊₂, über welche diese Ausgangsvariablen der in Fig 2. gezeigten Schaltung als Eingangsvariable zugeschaltet sind, sind daher nicht geschlossen. Ebenso sind die Selbsthalteeinrichtungen x₋₂, x₋₁, x₊₁ und x₊₂ (Teil-Einrichtungen der ersten speichernden Einrichtung) nicht gesetzt, so daß ihre über die Schützspulen x1₋₂, x1₋₁, x1₊₁ und x1₊₂ abgerufenen Ausgangsvariablen jeweils den logisches Wert O haben. Die Schließer x$\frac{\text{0}}{\text{-2}}$, x$\frac{\text{0}}{\text{-1}}$, x$\frac{\text{0}}{\text{+1}}$ und x$\frac{\text{0}}{\text{+2}}$, über welche diese Ausgangsvariablen der in Fig. 2 gezeigten Schaltung als Eingangsvariable zugeschaltet sind, sind daher nicht geschlossen. Daher sind die Schützspulen dl, vl, vr und dr des Stellglied-Systems, als auch die Schützspulen ld, ls, rs und rd, über welche Ausgangsvariable der in Fig. 2 gezeigten Schaltung der in Fig. 4 gezeigten kombinatorischen logischen Schaltung als Eingangsvariable zugeschaltet sind, ohne Strom. Damit sind auch die Schützspule s (Sternschütz) und die Schützspule d (Dreieckschütz) ohne Strom. Die Schütze des Stellglied-Systems sind abgefallen, womit der Schaltzustand Zs₀ des Stellglied-Systems und der Motorzustand d₀ geschaltet sind.

### 1. Stufe:

Zum Einschalten von d₊₁ wird der Drucktaster e₊₁ betätigt und dadurch die Selbsthalteeinrichtung x₊₁ gesetzt. Der logische Wert der Ausgangsvariablen von x₊₁ ändert sich damit von 0 auf 1. Die Ausgangsvariable von x₊₁ wird über die Schützspule x1₊₁ abgerufen, welche die Öffner x2₋₂, x2₋₁, x2₀ und x2₊₂ betätigt, wodurch das Setzen der Selbsthalteeinrichtungen x₋₂, x₋₁, x₀ und x₊₂ verriegelt wird. Ein neuerlicher Schaltbefehl vor Beendigung des Einschaltens von d₊₁ ist deshalb wirkungslos. Die Ausgangsvariable von x₊₁ wird auch über die haltende Schützspule x3₊₁ abgerufen, welche den Schließer y2₊₁ betätigt, welcher zu dem setzenden Schließer y3₊₁ der Selbsthalteeinrichtung y₊₁ in Serie geschaltet ist. Dadurch wird das Setzen der Selbsthalteeinrichtung y₊₁ aktiviert.

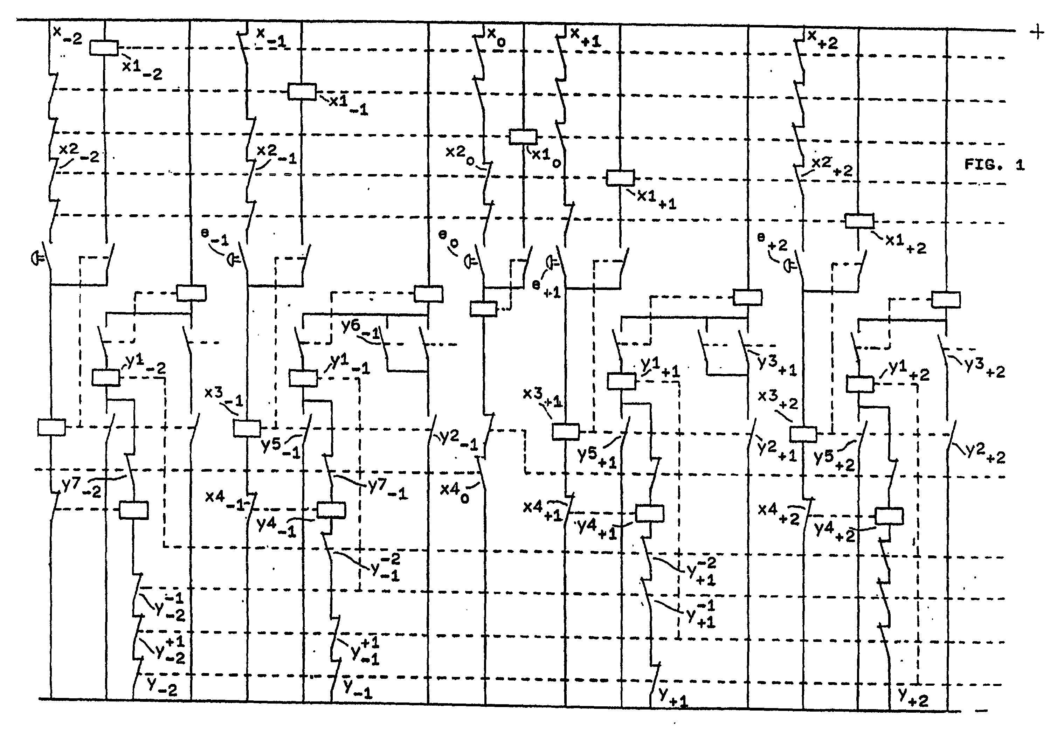

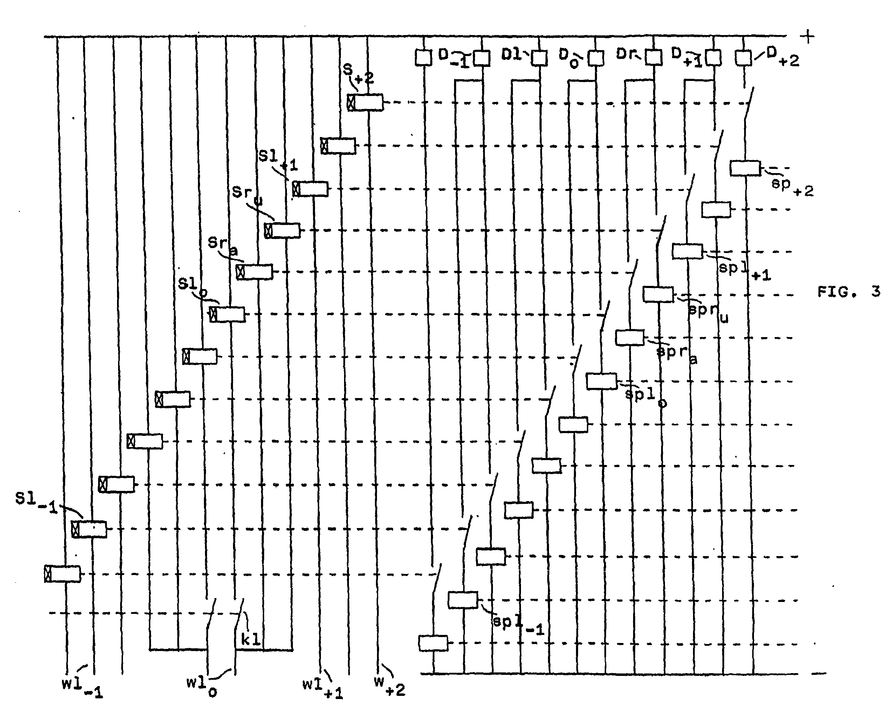

Die Schützspule x1₊₁ von x₊₁ betätigt auch den Schließer x^{o}₊₁ (Fig. 2). Da die Selbsthalteeinrichtungen y₋₂, y₋₁, y₊₁ und y₊₂ nicht gesetzt sind (Fig. 1), sind die durch die Schützspulen y1₋₂, y1₋₁, y1₊₁ und y1₊₂, über welche die Ausgangsvariablen dieser Selbsthalteeinrichtungen abgerufen werden, zu betätigenden Üffner y0₋₂, y0₋₁, y0₊₁ und y0₊₂ nicht geöffnet. Durch das Schließen des Schließers x$\frac{\text{0}}{\text{+1}}$ kommt daher die Leitung wrₐ unter Strom. Damit kommen auch über den nicht geöffneten Öffner mrₐ und die Leitung wlₒ die Schützspulen rs und vr unter Strom. Damit ist zur Herbeiführung der Drehzahl dr der Schaltzustand Zsr des Stellglied-Systems geschaltet (Sternschaltung/Rechtslauf). Andererseits wird, wenn die Leitung wlₒ unter Strom kommt, das Zeitrelais Srₐ (durch seine Eingangsvariable srₐ) gesetzt (Fig. 3). Dessen Verzögerungszeit ist so eingestellt, daß sich während ihres Ablaufs die Drehzahl des Motors von d₀ auf dr vergrößert. Bei Ende der Verzögerungszeit und Erreichen der Drehzahl dr schaltet des Zeitrelais Srₐ und zeigt der Drehzahlsensor Dr die Drehzahl dr an. Damit kommt die Schützspule sprₐ, welche in UND-Verknüpfung von Zeitrelais und Drehzahlsensor geschaltet ist, unter Strom. Über diese Schützspule wird eine Freigabevariable sr'ₐ als Ausgangsvariable der in Fig. 3 gezeigten Schaltung abgerufen, welche als Eingangsvariable über den Üffner mrₐ und den schließer nrₐ, welche einen Wechsler bilden, der in Fig. 2 gezeigten Schaltung zugeschaltet wird.

### 2. Stufe:

Durch das Öffnen des Öffners mrₐ und das Schließen des Schließers nrₐ kommt die Leitung wl₊₁ und über den nicht geöffneten Öffner ml₊₁ anstelle der Schützspule rs die Schützspule rd unter Strom. Damit ist der Schaltzüstand Zsr des Stellglied-Systems, durch welchen die Drehzahl dr herbeigeführt worden ist, weg- und der Scnaltzustand Zs₊₁ des Stellglied-Systems zur Herbeiführung der Drehzahl d₊₁ zugeschaltet (Dreieckschaltung/Rechtslauf). Andererseits wird, wenn die Leitung wl₊₁ unter Strom kommt, das Zeitrelais Sl₊₁ (durch seine Eingangsvariable sl₊₁) gesetzt (Fig. 3). Dessen Verzögerungszeit ist so eingestellt, daß sich während ihres Ablaufs die Drehzahl des Motors von dr auf d₊₁ vergrößert. Bei Ende der Verzögerungszeit und Erreichen der Drehzahl d₊₁ schaltet das Zeitrelais Sl₊₁ und zeigt der Drehzahlsensor D₊₁ die Drehzahl d₊₁ an. Damit kommt die Schützspule spl₊₁, welche in UND-Verknüpfung von Zeitrelais und Drehzahlsensor geschaltet ist, unter Strom. Über diese Schützspule wird eine Freigabevariable sl₊₁ als Ausgangsvariable der in Fig. 3 gezeigten Schaltung abgerufen, welche über den Schließer y3₊₁ der in Fig. 1 gezeigten Schaltung zugeschaltet ist. Da das Setzen der Selbsthalteeinrichtung y₊₁ aktiviert ist, wird diese Selbsthalteeinrichtung durch das Schließen des setzenden Schließers y3₊₁ gesetzt. Damit ändert sich der logische Wert der Ausgangsvariablen von y₊₁ von 0 auf 1. Die Ausgangsvariable von y₊₁ wird über die Schützspule y4₊₁ abgerufen, welche den Öffner x4₊₁ betätigt, welcher zur haltenden Schützspule x3₊₁ der Selbsthalteeinrichtung x₊₁ in Serie geschaltet ist. Dadurch wird die Selbsthalteeinrichtung x₊₁ gelöscht, so daß ein neuerlicher Schaltbefehl wirksam ist.

### Endzustand:

Die Ausgangsvariable der gesetzten Selbsthalteeinrichtung y₊₁ wird über die Schützspule y1₊₁ abgerufen und als Eingangsvariable über den Öffner yo₊₁ und den Schließer ys₊₁ der in Fig. 2 gezeigten Schaltung zugeschaltet. Durch das Öffnen des Öffners yo₊₁ sind die Leitungen wrₐ und wl₊₁ und damit die Zeitrelais Srₐ und Sl₊₁, welche dadurch abfallen, als auch die Schützspulen rd und vr nicht mehr unter Strom, welche statt dessen durch das Schließen des Schließers ys₊₁ über den nicht geöffneten Öffner o₊₁ unter Strom kommen. Damit ist der Betriebszustand d₊₁/Zs₊₁ geschaltet.

### Einschalten von d₊₂:

### Ausgangszustand:

Der Ausgangszustand ist derselbe wie beim Einschalten von d₊₁.

### 1. Stufe:

Die erste Stufe verläuft in Analogie zur 1. Stufe beim Einschalten von d₊₁ über: e₊₂, x₊₂, x3₊₂, y2₊₂, y₊₂ (deren Setzen aktiviert wird), x1₊₂, x$\frac{\text{0}}{\text{+2}}$, wrₐ, mrₐ, wr_{b}, rs, vr, Srₐ, Dr, sprₐ.

### 2. Stufe:

Die zweite Stufe verläuft in Analogie zur 2. Stufe beim Einschalten von d₊₁ über: mrₐ, nrₐ, wl₊₁, ml₊₁, rd, Sl₊₁, D₊₁, spl₊₁, y3₊₁, y₊₁ (Da jedoch das Setzen von y₊₁ nicht aktiviert ist, wird diese nicht gesetzt).

### 3. Stufe:

Über die Schützspule spl₊₁ wird die Freigabevariable sl₊₁ als Ausgangsvariable der in Fig. 3 gezeigten Schaltung abgerufen und andererseits als Eingangsvariable über den Öffner ml₊₁ und den Schließer nl₊₁, welche einen Wechsler bilden, der in Fig. 2 gezeigten Schaltung zugeschaltet. Durch das Öffnen des Öffners ml₊₁ und das Schließen des Schließers nl₊₁ kommt die Schützspule dr anstelle der Schützspulen rd und vr und kommt die Leitung w₊₂ unter Strom. Damit ist der Schaltzustand Zs₊₁ des Stellglied-Systems, durch welchen die Drehzahl d₊₁ herbeigeführt worden ist, wegund über die Schützspule dr und die in Fig. 4 gezeigte kombinatorische logische Schaltung der Schaltzustand Zs₊₂ des Stellglied-Systems zur Herbeiführung der Drehzahl d₊₂ zugeschaltet (Dahlanderschaltung/Rechtslauf). Andererseits wird, wenn die Leitung w₊₂ unter Strom kommt, das Zeitrelais S₊₂ (durch seine Eingangsvariable S₊₂) gesetzt (Fig. 3). Dessen Verzögerungszeit ist so eingestellt, daß sich während ihres Ablaufs die Drehzahl des Motors von d₊₁ auf d₊₂ vergrößert. Bei Ende der Verzögerungszeit und Erreichen der Drehzahl d₊₂ schaltet das Zeitrelais S₊₂ und zeigt der Drehzahlsensor D₊₂ die Drehzahl d₊₂ an. Damit kommt die Schützspule sp₊₂, welche in UND-Verknüpfung von Zeitrelais und Drehzahlsensor geschaltet ist, unter Strom. Über diese Schützspule wird eine Freigabevariable s₊₂ als Ausgangsvariable der in Fig. 3 gezeigten Schaltung abgerufen, welche über den Schließer y3₊₂ der in Fig. 1 gezeigten Schaltung zugeschaltet ist. Da das Setzen der Selbsthalteeinrichtung y₊₂ aktiviert ist, wird diese Selbsthalteeinrichtung durch das Schließen des setzenden Schließers y3₊₂ gesetzt. Damit ändert sich der logische Wert der Ausgangsvariablen von y₊₂ von O auf 1. Die Ausgangsvariable von y₊₂ wird über die Schützspule y4₊₂ abgerufen, welche den Öffner x4₊₂ betätigt, welcher zur haltenden Schützspule x3₊₂ der Selbsthalteeinrichtung x₊₂ in Serie geschaltet ist. Dadurch wird die Selbsthalteeinrichtung x₊₂ gelöscht, so daß ein neuerlicher Schaltbefehl wirksam ist.

### Endzustand:

Die Ausgangsvariable der gesetzten Selbsthalteeinrichtung y₊₂ wird über die Schützspule y1₊₂ abgerufen und als Eingangsvariable über den Öffner yo₊₂ und den Schließer ys₊₂ der in Fig. 2 gezeigten Schaltung zugeschaltet. Durch das öffnen des Öffners yo₊₂ sind. die Leitungen wrₐ, wl₊₁ und w₊₂ und damit die Zeitrelais Srₐ, Sl₊₁ und S₊₂, welche dadurch abfallen, als auch die Schützspule dr nicht mehr unter Strom, welche statt dessen durch das Schließen des Schließers ys₊₂ über den nicht geöffneten Öffner o₊₂ unter Strom kommt. Damit ist der Betriebszustand d₊₂/Zs₊₂ geschaltet.

Die Einschaltvorgänge in absteigender Richtung der seriellen Anordnung der Motorzustände verlaufen analog zu den Einschaltvorgängen in aufsteigender Richtung der seriellen Anordnung der Motorzustände.

Die Umschaltvorgänge in aufsteigender Richtung der seriellen Anordnung der Motorzustände verlaufen wie folgt:

### Umschalten von d₋₂ auf d₋₁:

### Ausgangszustand:

Der Ausgangszustand ist derselbe wie der Endzustand beim Einschalten von d₋₂.

### 1. Stufe (zugleich Endstufe):

Zum Umschalten auf d₋₁ wird der Drucktaster e₋₁ betätigt und dadurch die Selbsthalteeinrichtung x₋₁ gesetzt. Der logische Wert der Ausgangsvariablen von x₋₁ ändert sich damit von 0 auf 1. Die Ausgangsvariable von x₋₁ wird durch die haltende Schützspule x3₋₁ abgerufen, welche die Schließer y5₋₁ und y2₋₁ der Selbsthalteeinrichtung y₋₁ betätigt. Durch das Schließen des Schließers y5₋₁, welcher parallel zum Öffenr y$\frac{\text{-2}}{\text{-1}}$ geschaltet ist, wird das Löschen von y₋₁ neutralisiert, so daß y₋₁ gesetzt werden kann, obwohl der durch die Schützspule y1₋₂, über welche die Ausgangsvariable von y₋₂ abgerufen wird, betätigte und zur haltenden Schützspule von y₋₁ in Serie geschaltete Öffner y$\frac{\text{-2}}{\text{-1}}$ geöffnet ist. Durch das Schließen des Schließers y2₋₁, welcher in Serie zum setzenden Schließer y6₋₁ der Selbsthalteeinrichtung y₋₁ geschaltet ist, wird das Setzen von y₋₁ aktiviert.

Die Ausgangsvariable von x₋₁ wird auch über die Schützspule x1₋₁abgerufen, welche den Schließer x$\frac{\text{-2}}{\text{-1}}$ betätigt (Fig. 2). Dadurch kommen über den nicht geöffneten Öffner ml₋₁ die Schützspule k₋₂, welche den Öffner o₋₂ betätigt, und anstelle der Schützspule dl die Schützspulen ld und vl, als auch die Leitung wl₋₁ unter Strom. Damit ist der Schaltzustand Zs₋₂ des Stellglied-Systems, welcher die Drehzahl d₋₂ gehalten hat (Dahlanderschaltung/Linkslauf), weg- und der Schaltzustand Zs₋₁ des Stellglied-Systems zur Herbeiführung der Drehzahl d₋₁ zugeschaltet (Dreieckschaltung/Linkslauf). Andererseits wird, wenn die Leitung wl₋₁ unter Strom kommt, das Zeitrelais Sl₋₁ (durch seine Eingangsvariable sl₋₁) gesetzt (Fig. 3). Dessen Verzögerungszeit ist so eingestellt, daß sich während ihres Ablaufs die Drehzahl des Motors von d₋₂ auf d₋₁ vergrößert (absolut genommen verkleinert). Bei Ende der Verzögerungszeit und Erreichen der Drehzahl d₋₁ schaltet das Zeitrelais Sl₋₁ und zeigt der Drehzahlsensor D₋₁ die Drehzahl d₋₁ an. Damit kommt die Schützspule spl₋₁, welche in UND-Verknüpfung von Zeitrelais und Drehzahlsensor geschaltet ist, unter Strom. Über diese Schützspule wird eine Freigabevariable sl'₋₁ als Ausgangsvariable der in Fig. 3 gezeigten Schaltung abgerufen,welche über den Schließer y6₋₁ der in Fig. 1 gezeigten Schaltung zugeschaltet ist. Da das Setzen der Selbsthalteeinrichtung y₋₁ aktiviert ist, wird diese Selbsthalteeinrichtung durch das Schließen des setzenden Schließers y6₋₁ gesetzt. Damit ändert sich der logische Wert der Ausgangsvariablen von y₋₁ von 0 auf 1. Die Ausgangsvariable von y₋₁ wird über die Schützspule y1₋₁ abgerufen, welche den Öffner y$\frac{\text{-1}}{\text{-2}}$ betätigt, welcher zur haltenden Schützspule der Selbsthalteinrichtung y₋₂ in Serie geschaltet ist, deren Löschen nicht neutralisiert ist. Die Selbsthalteeinrichtung y₋₂ wird dadurch gelöscht. Damit ändert sich der logische Wert der Ausgangsvariablen von y₋₂ von 1 auf 0. Die Ausgangsväriable von y₋₂ wird über die Schützspule y1₋₂ abgerufen, welche den Öffner y$\frac{\text{-2}}{\text{-1}}$ nicht mehr betätigt, so daß dieser nicht mehr geöffnet ist. Damit kommt die Schützspule y4₋₁ unter Strom, über welche die Ausgangsvariable einer logischen UND-Verknüpfung der Ausgangsvariablen von y₋₁ und der dieser Selbsthalteeinrichtung zugeschalteten Lösch-Variablen abgerufen wird. Die Schützspule y4₋₁ betätigt den Öffner x4₋₁, wodurch die Selbsthalteeinrichtung x₋₁ gelöscht wird, so daß ein neuerlicher Schaltbefehl wirksam ist.

### Endzustand:

Der Endzustand ist derselbe wie beim Einschalten von d₋₁.

### Umschalten von d₋₁ auf d₊₁:

### Ausgangszustand:

Der Ausgangszustand ist derselbe wie der Endzustand beim Einschalten von d₋₁ bzw. beim Umschalten von d₋₂ auf d₋₁.

### 1. Stufe:

Die erste Stufe verläuft in Analogie zur 1. Stufe beim Umschalten von d₋₂ auf d₋₁ bzw. zur 1. Stufe beim Einschalten von d₊₁ über: e₊₁, x₊₁, x3₊₁, y2₊₁, y5₊₁, y₊₁ (deren Löschen neutralisiert und deren Setzen aktiviert wird), x1₊₁, x$\frac{\text{-1}}{\text{+1}}$, k₋₁, o₋₁, wrᵤ, mrᵤ, wlₒ, rs, Srᵤ, Dr, sprᵤ, mrᵤ, nrᵤ.

### 2. Stufe:

Die zweite Stufe verläuft in Analogie zur 2. Stufe beim Einschalten von d₊₁ bzw. zur 1. Stufe beim Umschalten von d₋₂ auf d₋₁ über: ml₊₁, rd, wl₊₁, Sl₊₁, D₊₁, spl₊₁, y3₊₁, y₊₁ (Da das Löschen von y₊₁ neutralisiert und ihr Setzen aktiviert ist, wird diese gesetzt), y1₊₁, y$\frac{\text{+1}}{\text{-1}}$, y1₋₁, y$\frac{\text{-1}}{\text{+1}}$, y4₊₁, x4₊₁.

### Endzustand:

Der Endzustand ist derselbe wie beim Einschalten von d₊₁.

### Umschalten von d₊₁ auf d₊₂:

### Ausgangszustand:

Der Ausgangszustand ist derselbe wie der Endzustand beim Einschalten von d₊₁.

### 1. Stufe (zugleich Endstufe):

Die erste Stufe verläuft in Analogie zur 1. Stufe beim Umschalten von d₋₂ auf d₋₁ über: e₊₂, x₊₂, x3_{+2'} y2₊₂, y5₊₂, y₊₂ (deren Löschen neutralisiert und deren Setzen aktiviert wird), x1₊₂, x$\frac{\text{+1}}{\text{+2}}$, k₊₁, o₊₁, w₊₂, dr, S₊₂, D₊₂, sp₊₂, y3₊₂, y₊₂ (Da das Löschen von y₊₂ neutralisiert und ihr setzen aktiviert ist, wird diese gesetzt), y1₊₂, y4₊₂, x4₊₂.

### Endzustand:

Der Endzustand ist derselbe wie beim Einschalten von d₊₂.

### Umschalten von d₋₂ auf d₊₁:

### Ausgangszustand:

Der Ausgangszustand ist derselbe wie der Endzustand beim Einschalten von d₋₂.

### 1. Stufe:

Die erste Stufe verläuft in Analogie zur 1. Stufe beim Umschalten von d₋₂ auf d₋₁ über: e₊₁, x₊₁, x3₊₁, y2₊₁, y5₊₁, y₊₁ (deren Löschen neutralisiert und deren Setzen aktiviert wird), x1₊₁, x$\frac{\text{-2}}{\text{+1}}$, k₋₂, o₋₂, wl₋₁, ml₋₁, ld, vl, Sl₋₁, Dl₋₁, spl₋₁ (Da jedoch das Setzen von y₋₁ nicht aktiviert ist, wird diese nicht gesetzt).

### 2. Stufe:

Die zweite Stufe verläuft in Analogie zur 1. Stufe beim Umschalten von d₋₁ auf d₊₁ über: ml₋₁, nl₋₁, a, mrᵤ, rs, vr, wlₒ, Srᵤ, Dr, sprᵤ.

### 3. Stufe:

Die dritte Stufe verläuft in Analogie zur 2. Stufe beim Umschalten von d₋₁ auf d₊₁ über: mrᵤ, nrᵤ, ml₊₁, rd, wl₊₁, Sl₊₁, D₊₁, spl₊₁, y3₊₁, y₊₁ (Da das Löschen von y₊₁ neutalisiert und ihr Setzen aktiviert ist, wird diese gesetzt), y1₊₁, y4₊₁, x4₊₁.

### Endzustand:

Der Endzustand ist derselbe wie beim Einschalten von d₊₁.

### Umschalten von d₋₁ auf d₊₂:

### Ausgangszustand:

Der Ausgangszustand ist derselbe wie der Endzustand beim Umschalten von d₋₂ auf d₋₁.

### 1. Stufe:

Die erste Stufe verläuft in Analogie zur 1. Stufe beim Umschalten von d₋₁ auf d₊₁ über: e₊₂, x₊₂, x3₊₂, y2₊₂, y5₊₂, y₊₂ (deren Löschen neutralisiert und deren Setzen aktiviert wird), x1₊₂, x$\frac{\text{-1}}{\text{+2}}$, k₋₁, o₋₁, wrᵤ, mrᵤ, rs, vr, wlₒ, Srᵤ, Dr, sprᵤ.

### 2. Stufe:

Die zweite Stufe verläuft in Analogie zur 2. Stufe beim Umschalten von d₋₁ auf d₊₁ über: mrᵤ, nrᵤ, ml₊₁, rd, wl₊₁, Sl₊₁, D₊₁, spl₊₁ (Da jedoch das Setzen von y₊₁ nicht aktiviert ist, wird diese nicht gesetzt).

### 3. Stufe:

Die dritte Stufe verläuft in Analogie zur 1. Stufe beim Umschalten von d₊₁ auf d₊₂ über: ml₊₁, n1₊₁, dr, w₊₂, S₊₂, D₊₂, sp₊₂, y3₊₂, y₊₂ (Da das Löschen von y₊₂ neutralisiert und ihr Setzen aktiviert ist, wird diese gesetzt), y1₊₂, y4₊₂, x4₊₂.

### Endzustand:

Der Endzustand ist derselbe wie beim Einschalten von d₊₂. Umschalten von d₋₂ auf d₊₂:

### Ausgangszustand:

Der Ausgangszustand ist derselbe wie der Endzustand beim Einschalten von d₋₂.

### 1. Stufe:

Die erste Stufe verläuft in Analogie zur 1. Stufe beim Umschalten von d₋₂ auf d₋₁ über: e₊₂, x₊₂, x3₊₂, y2₊₂, y5₊₂, y₊₂ (deren Löschen neutralisiert und deren Setzen aktiviert wird), x1₊₂, x$\frac{\text{-2}}{\text{+2}}$, k₋₂, o₋₂, wl₋₁, ml₋₁, ld, vl, Sl₋₁, Dl₋₁, spl₋₁ (Da jedoch das Setzen von y₋₁ nicht aktiviert ist, wird diese nicht gesetzt).

### 2. Stufe:

Die zweite Stufe verläuft in Analogie zur 1. Stufe beim Umschalten von d₋₁ auf d₊₁ über: ml₋₁, nl₋₁, a, mrᵤ, rs, vr, wlₒ, Srᵤ, Dr, sprᵤ.

### 3. Stufe:

Die dritte Stufe verläuft in Analogie zur 2. Stufe beim Umschalten von d₋₁ auf d₊₁ über: mrᵤ, nrᵤ, ml₊₁, rd, wl₊₁, Sl₊₁, D₊₁, spl₊₁ (Da jedoch das Setzen von y₊₁ nicht aktiviert ist, wird diese nicht gesetzt).

### 4. Stufe:

Die vierte Stufe verläuft in Analogie zur 1. Stufe beim Umschalten von d₊₁ auf d₊₂ über: ml₊₁, nl₊₁, dr, w₊₂, S₊₂, D₊₂, sp₊₂, y3₊₂, y₊₂ (Da das Löschen von y₊₂ neutralisiert und ihr Setzen aktiviert ist, wird diese gesetzt), y1₊₂, y4₊₂, x4₊₂.

### Endzustand:

Der Endzustand ist derselbe wie beim Einschalten von d₊₂.

Die Umschaltvorgänge in absteigender Richtung der seriellen Anordnung der Motorzustände verlaufen analog zu den Umschaltvorgängen in aufsteigender Richtung der seriellen Anordnung der Motorzustände.

Die Ausschaltvorgange in aufsteigender Richtung der seriellen Anordnung der Motorzustände verlaufen wie folgt:

### Ausschalten von d₋₁:

### Ausgangszustand:

Der Ausgangszustand ist derselbe wie der Endzustand beim Einschalten von d₋₁.

### 1. Stufe:

Zum Ausschalten von d₋₁ wird der Drucktaster e₀ betätigt und dadurch die Selbsthalteeinrichtung x₀ gesetzt. Der logischen Wert der Ausgangsvariablen von x₀ ändert sich damit von 0 auf 1. Die Ausgangsvariable von x₀ wird über die Schützspule x1₀ abgerufen, welche die Schließer kl (Fig. 3) und x$\frac{\text{-1}}{\text{0}}$ (Fig. 2) betätigt. Dadurch kommen die Schützspule k₋₁, welche den Öffner o₋₁ betätigt, und anstelle der Schützspulen ld und vl die Schützspulen rs und vr, als auch die Leitung wl₀ unter Strom. Damit ist der Schaltzustand Zs₋₁ des Stellglied-Systems, welcher die Drehzahl d₋₁ gehalten hat (Dreieckschaltung/Linkslauf), weg und der Schaltzustand Zsr des Stellglied-Systems zur Herbeiführung der Drehzahl d₀ = 0 zugeschaltet (Sternschaltung/Rechtslauf, Gegenstrombremsung). Andererseits wird, wenn die Leitung wl₀ unter Strom kommt, über den geschlossenen Schließer kl das Zeitrelais Sl₀ (durch seine Eingangsvariable slₒ) gesetzt (Fig. 3). Dessen Verzögerungszeit ist so eingestellt, daß sich während ihres Ablaufs die Drehzahl des Motors von d₋₁ auf d₀ = 0 vergrößert (absolut genommen verkleinert). Bei Ende der Verzögerungszeit und Erreichen der Drehzahl null scnaltet das Zeitrelais Sl₀ und zeigt der Drehzahlsensor D₀ die Drehzahl null an. Damit kommt die Schützspule spl₀, welche in UND-Verknüpfung von Zeitrelais und Drehzahlsensor geschaltet ist, unter Strom. Über die Schützspule sp₀ wird eine Freigabevariable sl'₀ als Ausgangsvariable der in Fig. 3 gezeigten Schaltung abgerufen, welche über die Öffner y7₋₁ und x4₀ der in Fig. 1 gezeigten Schaltung zugeschaltet ist.

### 2. Stufe:

Durch das Öffnen des Öffners y7₋₁ wird die Selbsthalteeinrichtung y₋₁ gelöscht. Durch das Öffnen des Öffners x4₀ wird die Selbsthalteeinrichtung x₀ gelöscht. Damit ist der Zustand d₀/Zs₀ geschaltet (Ausgangszustand beim Einschalten von d₊₁).

### Ausschalten von d₋₂:

### Ausgangszustand:

Der Ausgangszustand ist derselbe wie der Endzustand beim Einschalten von d₋₂.

### 1. Stufe:

Die erste Stufe verlauft in Analogie zur 1. Stufe beim Umschalten von d₋₂ auf d₋₁ bzw. zur 1. Stufe beim Ausschalten von d₋₁ über: e₀, x₀, k1, x$\frac{\text{-2}}{\text{0}}$, k₋₂, o₋₂, wl₋₁, ld, vl, Sl₋₁, Dl₋₁, spl₋₁ (Da jedoch das Setzen von y₋₁ nicht aktiviert ist, wird diese nicht gesetzt).

### 2. Stufe:

Die zweite Stufe verläuft in Analogie zur 2. Stufe beim Umschalten von d₋₂ auf d₊₁ bzw. zur 1. Stufe beim Ausschalten von d₋₁ über: ml₋₁, nl₋₁, b, rs, vr, wl₀, kl, Sl₀, D₀, spl₀.

### 3. Stufe:

Die dritte Stufe verläuft in Analogie zur 2. Stufe beim Ausschalten von d₋₁ über: y7₋₂, x4₀. Damit ist der Zustand d₀/Zs₀ geschaltet (Ausgangszustand beim Einschalten von d₊₁).

Die Ausschaltvorgänge in absteigender Richtung der seriellen Anordnung der Motorzustande verlaufen analog zu den Ausschaltvorgängen in autsteigender Richtung der seriellen Anordnung der Motorzustande.

Aus den zu berücksichtigenden aus den Eigenschaften des Motors sich ergebenden Vorgaben kann die Logiktabelle für den in Fig. 2 gezeigten Teil der kombinatorischen logischen Schaltung erstellt werden. Die Tabellen 4a, 4b, 4c und 4d zeigen die Logiktabelle in zusammengefaßter und abgekürzter Form.

Die Tabelle 4a bezieht sich auf die Schaltung der Betriebszustände d₋₂/Zs₋₂, d₋₁/Zs₋₁, d₊₁/Zs₊₁, d₊₂/Zs₊₂ und des Stillstands d₀/Zs₀. Die Tabelle 4b bezieht sich auf die Einschaltvorgärige in aufsteigender Richtung der seriellen Anordnung der Motorzustände, die Tabelle 4c auf die Umschaltvorgänge in aufsteigender Richtung der seriellen Anordnung der Motorzustände und die Tabelle 4d auf die Ausschaltvorgänge in aufsteigender Richtung der seriellen Anordnung der Motorzustände. Die Logiktabelle für die Einschaltvorgänge in absteigender Richtung der seriellen Anordnung der Motorzustände ergibt sich analog zur Tabelle 4b, die Logiktabelle für die Umschaltvorgänge in absteigender Richtung der seriellen Anordnung der Motorzustände analog zur Tabelle 4c und die Logiktabelle für die Ausschaltvorgänge in absteigender Richtung der seriellen Anordnung der Motorzustände analog zur Tabelle 4d.

Der Index der gesetzten Teil-Einrichtung der zweiten speichernden Einrichtung und damit der Index des bestehenden Motorzustands ist eingetragen in der ersten Spalte der Tabellen 4a, 4c und 4d. Der Index der gesetzten Teil-Einrichtung der ersten speichernden Einrichtung und damit der Index des herbeizuführenden Motorzustands ist eingetragen in der zweiten Spalte der Tabellen 4b, 4c und 4d. Fehlende Eintragungen bedeuten die Eintragungen in der nächsthöheren ausgefüllten Zeile. Die Zeilen der Tabellen 4b, 4c und 4d beziehen sich jeweils auf den Ein-, Um- bzw. Ausschaltvorgang vom Motorzustand mit dem für die Um- und Ausschaltvorgänge in der ersten Spalte eingetragenen Index auf den Motorzustand mit dem in der zweiten Spalte eingetragenen Index, wobei eine Zeile jeweils einer Stufe des Schaltvorgangs entspricht.

Die Eingangsseite der Logiktabelle wird dargestellt durch die erste und zweite Spalte von Tabelle 4a, die erste bis vierte Spalte von Tabelle 4b, die erste bis fünfte Spalte von Tabelle 4c und die erste bis dritte Spalte von Tabelle 4d. Die Ausgangsseite der Logiktabelle wird dargestellt durch die dritte bis zehnte Spalte von Tabelle 4a, die fünfte bis fünfzehnte Spalte von Tabelle 4b, die sechste bis siebzehnte Spalte von Tabelle 4c und die vierte bis vierzehnte Spalte von Tabelle 4d. Die logischen Werte für die Eingangsvariablen, welche Ausgangsvariable der Zeitrelais/Drehzahlsensorschaltung sind (Freigabevariable), sind eingetragen in der dritten und vierten Spalte von Tabelle 4b, der dritten bis fünften Spalte von Tabelle 4c und der dritten Spalte von Tabelle 4d. Für nicht angeführte Variable ist durchwegs der logische Wert 0 anzunehmen. Die logischen Werte für die Ausgangsvariablen, welche Eingangsvariable der Zeitrelais/Drehzahlsensorschaltung sind, sind eingetragen in der fünften und sechsten Spalte von Tabelle 4b, der sechsten bis achten Spalte von Tabelle 4c und in der vierten Spalte von Tabelle 4d. Für nicht angeführte Variable ist durchwegs der logische Wert 0 anzunehmen. Die logischen Werte für die Ausgangsvariablen, welche über die Zeitrelais/Drehzahlsensorschaltung Eingangsvariable der zweiten speichernden Einrichtung sind (Freigabevariable), sind eingetragen in der siebten Spalte von Tabelle 4b, der neunten Spalte von Tabelle 4c und der fünften Spalte von Tabelle 4d. Die logischen Werte für die über die Schützspulen abgerufenen Ausgangsvariablen sind eingetragen in den jeweils restlichen Spalten.

An Hand der Logiktabelle kann der in Fig. 3 gezeigte Teil der kombinatorischen logischen Schaltung nach logischen Verfahren entworfen werden. Nach dem aus dem Fundamentalsatz der Schaltalgebra hergeleiteten Verfahren der Vollkonjunktion entsteht die in einer Spalte auf der Ausgangsseite eingetragene logische Variable am Ausgang einer ODER-Verknüpfung, in welche für die Zeilen, in denen in der der Ausgangsvariablen entsprechenden Spalte auf der Ausgangsseite der logische Wert 1 eingetragen ist, jeweils die Ausgangsvariable einer UND-Verknüpfung als Eingangsvariable eingeht, in welche ihrerseits als Eingangsvariable die logischen Werte der Eingangsvariablen der Logiktabelle, für welche in der Zeile der logische Wert 1 eingetragen ist, nichtinvertiert und die logischen Werte der Eingangsvariablen der Logiktabelle, für welche in der Zeile der logische Wert 0 eingetragen ist, invertiert eingehen (etwa Groh, H., Weber, W., Digitaltechnik I, Düsseldorf 1969, Seiten 63 - 65). Die einer Zeile entsprechende UND-Verknüpfung (Vollkonjunktion) hat damit dann und nur dann am Ausgang den logischen Wert 1, wenn die Eingangsvariablen die logischen Werte haben, welche für sie in der Zeile eingetragen sind.

Da von den Teil-Einrichtungen der zweiten bzw. der ersten speichernden Einrichtung immer höchstens eine gesetzt ist, haben die Ausgangsvariablen der von den gesetzten Teil-Einrichtungen jeweils verschiedenen Teil-Einrichtungen an der Eingangsseite der kombinatorischen logischen Schaltung ohnehin immer den logischen Wert 0, so daß ihre Zuschaltung zur Vollkonjunktion entfällt, wodurch sich an der logischen Variablen am Ausgang der Vollkonjunktion nichts ändert. Ebenso entfällt infolge der stufenweisen Schaltung der Freigabevariablen die Zuschaltung der Freigabevariablen, für welche der logische Wert 0 und in derselben Zeile in einer Spalte weiter rechts der logische Wert 1 eingetragen ist und die Zuschaltung der Freigabevariablen, für welche der logische Wert 0 und in zwei aufeinanderfolgenden Spalten weiter links die logischen Werte 1 und 0 eingetragen sind zur Vollkonjunktion dieser Zeile.

Bei einer Schaltung mit Wegeschaltelementen entspricht auf der Ausgangsseite dem logischen Wert 1 eine Spule unter Strom und damit eine bestehende Leitungsverbindung und dem logischen Wert 0 eine Spule ohne Strom und damit eine unterbrochene Leitungsverbindung. ODER-Verknüpfungen werden durch Parallelschaltung realisiert, UND-Verknüpfungen durch Serienschaltung. Eingangsvariable werden über Schließer und invertiert über Öffner zugeschaltet. Damit ergibt sich die in Fig. 2 gezeigte Schaltung, wobei in formaler Entsprechung zum distributiven Gesetz (etwa Groh, H., Weber, W., a.a.O., Seite 57) Eingangsvariable, für welche in aufeinanderfolgenden Zeilen eines Schaltvorgangs durchwegs der logische Wert 1 eingetragen ist, den diesen Zeilen entsprechenden Vollkonjunktionen über einen gemeinsamen Schließer zugeschaltet sind.

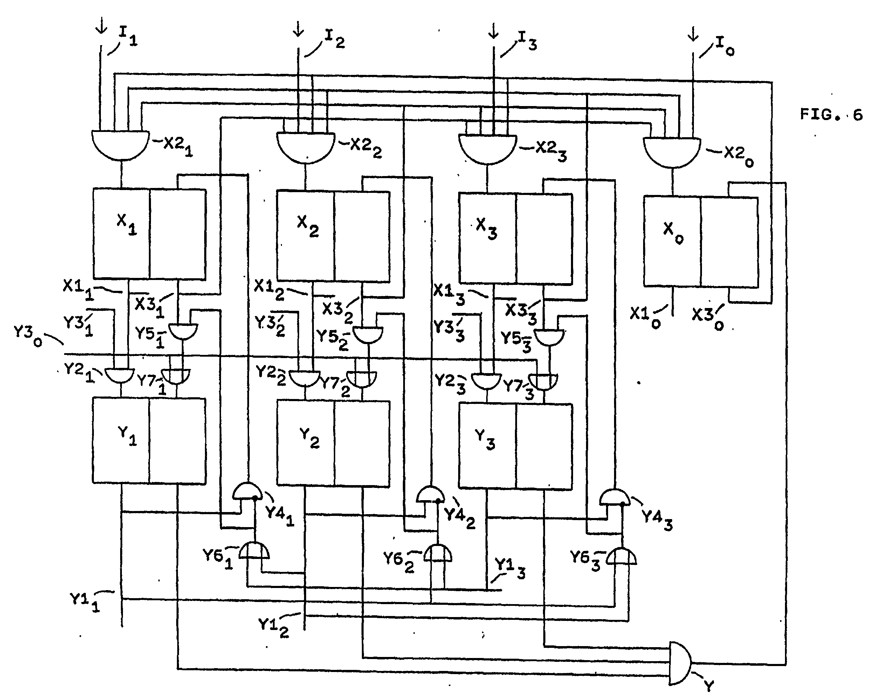

Im zweiten Anwendungsbeispiel (Fig. 6 u. 7) wird das Stellglied-System des Motors durch einen Wechselrichter Wr und das dazugehörige Steuergerät, hier einen programmierbaren Baustein (PROM), dargestellt. Das Stellglied-System wird mittels dreier Eingangsvariabler f₁, f₂ und f₃ geschaltet, welche dem Steuergerät über die ebenso bezeichneten ODER-Gatter zugeschaltet sind. Dabei entspricht den Betriebsdrehzahlen q₁, q₂ bzw. q₃ jeweils der logische Wert 1 der Variablen f₁, f₂ bzw. f₃ und der logische Wert 0 der jeweils übrigen der Variablen f₁, f₂ und f₃.

Die Betriebsdrehzahlen bilden zusammen mit der Drehzahl null des Stillstands eine serielle Anordnung: q₀, q₁, q₂, und q₃ mit q₀= O. Diese Drehzahlen sind die zu schaltenden diskreten Zustände des Motors. Die den Motorschaltungen entsprechenden Schaltzustände des Stellglied-Systems seien wie folgt bezeichnet:

| | |
|---|---|
| Stillstand | Qs₀ |
| niedere Drehzahl | Qs₁ |
| mittlere Drehzahl | Qs₂ |
| hohe Drehzahl | Qs₃ |

Eine Kombination Motorzustand/Schaltzustand des Stellgliedsystems wird im Folgenden als Zustand bezeichnet.

Die Einschaltvorgänge verlaufen über folgende Zustände:
Einschalten von q₁ (Umschalten von q₀ auf q₁):
   q₀/Qs₀, q₀/Qs₁, q₁/Qs₁
Einschalten von q₂ (Umschalten von q₀ auf q₂):
   q₀/Qs₀, q₀/Qs₁, q₁/Qs₁, q₁/Qs₂, q₂/Qs₂
Einschalten von q₃ (Umschalten von q₀ auf q₃):
   q₀/Qs₀, q₀/Qs₁, q₁/Qs₁, q₁/Qs₂, q₂/Qs₂, q₂/Qs₃, q₃/Qs₃

Die Umschaltvorgänge in aufsteigender Richtung der seriellen Anordnung der Motorzustände verlaufen über folgende Zustände:
Umschalten von q₁ auf q₂:
   q₁/Qs₁, q₁/Qs₂, q₂/Qs₂
Umschalten von q₁ auf q₃:
   q₁/Qs₁, q₁/Qs₂, q₂/Qs₂, q₂/Qs₃, q₃/Qs₃
Umschalten von q₂ auf q₃:
   q₂/Qs₂, q₂/Qs₃, q₃/Qs₃

Die Umschaltvorgänge in absteigender Richtung der seriellen Anordnung der Motorzustände verlaufen über folgende Zustände:
Umschalten von q₃ auf q₂:
   q₃/Qs₃, q₃/Qs₂, q₂/Qs₂
Umschalten von q₃ auf q₁:
   q₃/Qs₃, q₃/Qs₂, q₂/Qs₂, q₂/Qs₁, q₁/Qs₁
Umschalten von q₂ auf q₁:
   q₂/Qs₂, q₂/Qs₁, q₁/Qs₁

Die Ausschaltvorgänge verlaufen über folgende Zustände:
Ausschalten von q₃ (Umschalten von q₃ auf q₀):
   q₃/Qs₃, q₃/Qs₂, q₂/Qs₂, q₂/Qs₁, q₁/Qs₁, q₁/Qs₀, q₀/Qs₀
Ausschalten von q₂ (Umschalten von q₂ auf q₀):
   q₂/Qs₂, q₂/Qs₁, q₁/Qs₁, q₁/Qs₀, q₀/Qs₀
Ausschalten von q₁ (Umschalten von q₁ auf q₀):
   q₁/Qs₁, q₁/Qs₀, qₒ/Qs₀

Das Ein-, Um- bzw. Ausschalten soll nur von einem beim vorhergehenden Aus-, Um- bzw. Einschalten als Endzustand hinlänglich erreichten Ausgangszustand aus möglich sein. Ebenso soll ein Weiterschalten nur von einem hinlänglich erreichten Zwischenzustand aus möglich sein. Demzufolge kann durch Bemessung der Verzögerungszeit des zu Beginn des Ein-, Um- bzw. Ausschaltens bzw. des Weiterschaltens gesetzten Zeitschaltelements das hinlängliche Erreichen des nächsten Zustands gesichert werden.

Die Einschaltvorgänge verlaufen wie folgt:

### Einschalten von q₁:

### Ausgangszustand:

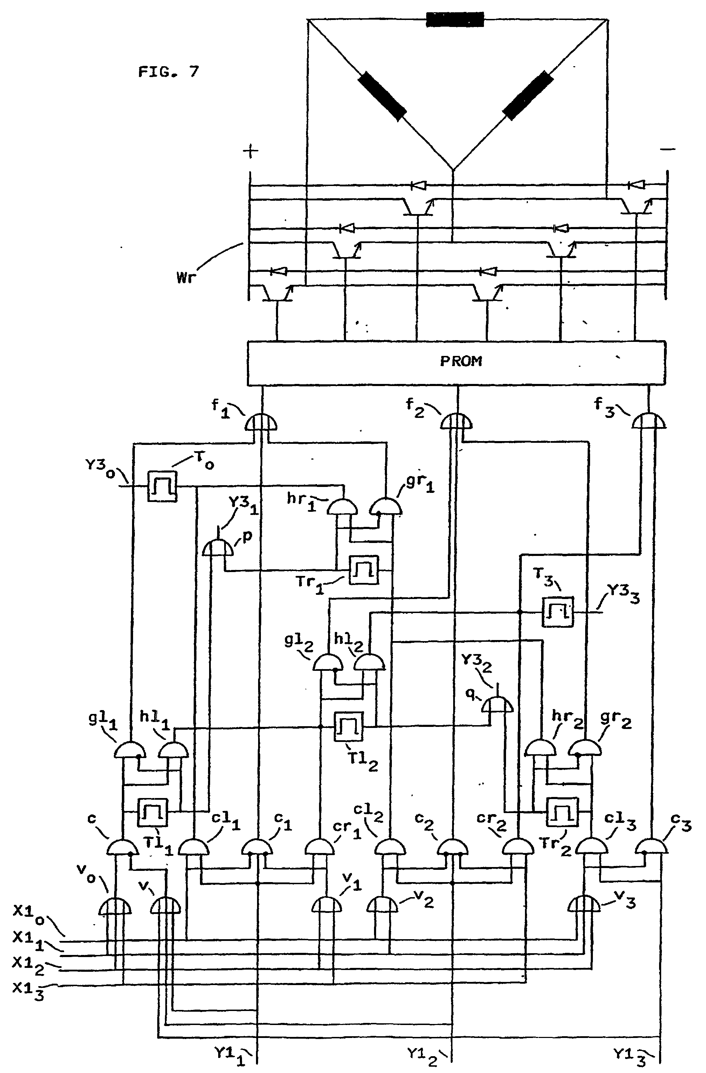

Im Ausgangszustand sind die Flip-Flops Y₁, Y₂ und Y₃ nicht gesetzt, so daß ihre über die Leitungen Y1₁, Y1₂ und Y1₃ abgerufenen Ausgangsvariablen jeweils den logischen Wert 0 haben. Ebenso sind die Flip-Flops X₁, X₂, X₃ und X₀ nicht gesetzt, so daß ihre über die Leitungen X1₁, X1₂, X1₃ und X1₀ abgerufenen Ausgangsvariablen jeweils den logischen Wert 0 haben. Damit sind (Fig. 7) nicht alle Eingänge der UND-Gatter c₁, c₂ und c₃ unter Strom, alle Eingänge des ODER-Gatters v₀ ohne Strom, und damit nicht alle Eingänge der UND-Gatter c und gl₁, cl₂ und gr₁, cr₁ gl₂, cl₃ und gr₂, hl₂ und cr₂ unter Strom, so daß jeweils alle Eingänge der ODER-Gatter f₁, f₂ und f₃ ohne Strom sind. Damit ist der Schaltzustand Qs₀ des Stellglied-Systems geschaltet, welcher dem Motorzustand q₀, also dem Stillstand, entspricht.

### 1. Stute (zugleich Endstufe):

Über die Leitung I₁, welche dem UND-Gatter X2₁ zugeschaltet ist, dessen Ausgang dem Setz-Eingang des Flip-Flops X₁ zugeschaltet ist, kommt als Impuls der Befehl zum Einschalten von q₁, wodurch das Flip-Flop X₁ gesetzt wird. Der logische Wert der Ausgangsvariablen von X₁ andert sich damit von 0 auf 1. Die invertierte Ausgangsvariable von X₁ wird über die Leitung X3₁ abgerufen, welche den UND-Gattern X2₂, X2₃ und X2₀ zugeschaltet ist, wodurch das Setzen der Flip-Flops X₂, X₃ und X₀ verriegelt wird. Ein neuerlicher Schaltbefehl vor Beendigung des Einschaltens von q₁ ist deshalb wirkungslos. Die Ausgangsvariable von X₁ wird über die Leitung X1₁ abgerufen, welche einem Eingang des UND-Gatters Y2₁ zugeschaltet ist, dessen Ausgang dem Setz-Eingang des Flip-Flops Y₁ zugeschaltet ist. Dadurch wird das Setzen des Flip-Flops Y₁ aktiviert, welches somit über die Leitung Y3₁ erfolgen kann, welche dem anderen Eingang des UND-Gatters Y2₁ zugeschaltet ist.

Über die Leitung X1₁ kommt ein Eingang des ODER-Gatters v₀ unter Strom (Fig. 7). Da die Leitungen Y1₁, Y1₂ und Y1₃ ohne Strom sind, sind alle Eingänge des ODER-Gatters v ohne Strom. Da dem UND-Gatter c der Ausgang von v₀ und invertiert der Ausgang von v zugeschaltet sind, kommt einerseits der Eingang des UND-Gatters gl₁, welchem der Ausgang von c zugeschaltet ist, unter Strom und wird andererseits das Zeitschaltelement Tl₁ (durch seine Eingangsvariable tl₁) gesetzt, dessen Ausgang dem anderen Eingang des UND-Gatters gl₁ invertiert zugeschaltet ist. Solange das Zeitschaltelement Tl₁ noch nicht geschaltet hat, ist der Schaltzustand Qs₁ des Stellglied-Systems zur Herbeiführung der Drehzahl q₁ über das UND-Gatter gl₁ und das ODER-Gatter f₁ geschaltet. Wenn das Zeitschaltelement Tl₁ schaltet, also die Drehzahl q₁ hinlanglich herbeigeführt ist, kommt (durch die Ausgangsvariable tl'₁ von Tl₁ als Freigabevariabler) über das ODER-Gatter p die Leitung Y3₁ unter Strom, über welche das Flip-Flop Y₁, dessen Setzen aktiviert ist, gesetzt wird (Fig. 6). Der logische Wert der Ausgangsvariablen von Y₁ ändert sich damit von 0 auf 1. Die Ausgangsvariable von Y₁ wird über die Leitung Y1₁ abgerufen, welche dem UND-Gatter y4₁ zugeschaltet ist, dessen Ausgang dem Rücksetz-Eingang des Flip-Flops X₁ zugeschaltet ist. Das Flip-Flop X₁ wird dadurch rückgesetzt.

### Endzustand:

Gegenüber dem Ausgangszustand ist das Flip-Flop Y₁ gesetzt, so daß seine über die Leitung Y1₁ abgerufene Ausgangsvariable den logischen Wert 1 hat. Damit steht das ODER-Gatter f₁ nunmehr über das UND-Gatter c₁ unter Strom, dem über die Leitung Y1₁ die Ausgangsvariable von Y₁, über die Leitung X1₀ die Ausgangsvariable von X₀ invertiert und über das ODER-Gatter v₁ und die Leitungen X1₂ bzw. X1₃ die Ausgangsvariablen von X₂ und X₃ invertiert zugeschaltet sind. Damit ist der Betriebszustand q₁/Qs₁ geschaltet.

### Einschalten von q₂:

### Ausgangszustand:

Der Ausgangszustand ist derselbe wie beim Einschalten von q₁.

### 1. Stufe:

Die erste Stufe verläuft in Analogie zur 1. Stufe beim Einschalten von q₁ über: I₂, X2₂, X₂ (welches gesetzt wird), X1₂, Y2₂, Y₂ (dessen Setzen aktiviert wird), v₀, c, Tl₁, gl₁, f₁ (Da jedoch das Setzen des Flip-Flops Y₁ nicht aktiviert ist, wird es nicht gesetzt).

### 2. Stufe:

Wenn das Zeitschaltelement Tl₁ schaltet, kommt (durch die Ausgangsvariable tl'₁ von Tl₁ als Freigabevariabler) andererseits ein Eingang des UND-Gatters hl₁ unter Strom. Da dem anderen Eingang von hl₁ der Ausgang von c zugeschaltet ist, kommt einerseits der Eingang des UND-Gatters gl₂, welchem der Ausgang von hl₁ zugeschaltet ist, unter Strom und wird anderdas Zeitschaltelement Tl₂ (durch seine Eingangsvariable tl₂) gesetzt, dessen Ausgang dem anderen Eingang des UND-Gatters gl₂ invertiert zugeschaltet ist. Solange das Zeitschaltelement Tl₂ noch nicht geschaltet hat, ist der Schaltzustand Qs₂ des Stellglied-Systems zur Herbeiführung der Drehzahl q₂ über das UND-Gatter gl₂ und das ODER-Gatter f₂ geschaltet. Wenn das Zeitschaltelement Tl₂ schaltet, also die Drehzahl q₂ hinlänglich herbeigeführt ist, kommt (durch seine Ausgangsvariable tl'₂ als Freigabevariabler) über das ODER-Gatter q die Leitung Y3₂ unter Strom, über welche das Flip-Flop Y₂, dessen Setzen aktiviert ist, gesetzt wird (Fig. 6). Der logische Wert der Ausgangsvariablen von Y₂ ändert sich damit von 0 auf 1. Die Ausgangsvariable von Y₂ wird über die Leitung Y1₂ abgerufen, welche dem UND-Gatter Y4₂ zugeschaltet ist, dessen Ausgang dem Rücksetz-Eingang des Flip-Flops X₂ zugeschaltet ist. Das Flip-Flop X₂ wird dadurch rückgesetzt.

### Endzustand:

Gegenüber dem Ausgangszustand ist das Flip-Flop Y₂ gesetzt, so daß seine über die Leitung Y1₂ abgerufene Ausgangsvariable den logischen Wert 1 hat. Damit steht das ODER-Gatter f₂ nunmehr über das UND-Gatter c₂ unter Strom, dem über die Leitung Y1₂ die Ausgangsvariable von Y₂, über das ODER-Gatter v₂ und die Leitungen X1₀ bzw. X1₁ die Ausgangsvariablen von X₀ und X₁ invertiert und über die Leitung X1₃ die Ausgangsvariable von X₃ invertiert zugeschaltet sind. Damit ist der Betriebszustand q₂/Qs₂ geschaltet.

### Einschalten von q₃:

### Ausgangszustand:

Der Ausgangszustand ist derselbe wie beim Einschalten von q₁.

### 1. Stufe:

Die erste Stufe verlauft in Analogie zur 1. Stufe beim Einschalten von q₁ über: I₃, X2₃, X₃ (welches gesetzt wird), X1₃, Y2₃, Y₃ (dessen Setzen aktiviert wird), v₀, c, Tl₁, gl₁, f₁ (Da jedoch das Setzen des Flip-Flops Y₁ nicht aktiviert ist, wird es nicht gesetzt).

### 2. Stute:

Die zweite Stufe verlauft in Analogie zur 2. Stufe beim Einschalten von q₂ über: hl₁, Tl₂, gl₂, f₂ (Da jedoch das Setzen des Flip-Flops Y₂ nicht aktiviert ist, wird es nicht gesetzt).

### 3. Stufe:

Wenn das Zeitschaltelement Tl₂ schaltet, kommt (durch die Ausgangsvariable tl'₂ von Tl₂ als Freigabevariabler) andererseits ein Eingang des UND-Gatters hl₂ unter Strom. Da dem anderen Eingang von hl₂ der Ausgang von hl₁ zugeschaltet ist, kommt einerseits das ODER-Gatter f₃, welchem der Ausgang von hl₂ zugeschaltet ist, unter Strom und wird andererseits das Zeitschaltelement T₃ (durch seine Eingangsvariaeie t₃) gesetzt. Solange das Zeitschaltelement T₃ noch nicht geschaltet hat, ist der Schaltzustand Os₃ des Stellglied-Systems zur Herceiführung der Drehzahl q₃ über das ODER-Gatter f₃ geschaltet. Wenn das Zeitschaltelement T₃ schaltet, kommt (durch die Ausgangsvariable t'₃ von T₃ als Freigabevariabler) die Leitung Y3₃ unter Strom, über welche das Flip-Flop y₃, dessen Setzen aktiviert ist, gesetzt wird (Fig. 6). Der logische Wert der Ausgangsvariablen von Y₃ ändert sich damit von 0 aur 1. Im übrigen verläuft die 3. Stufe in Analogie zur 1. bzw. 2. Stute beim Einschalten von q₁ bzw. q₂ über: Y1₃, Y4₃, X₃.

### Endzustand:

Gegenüber dem Ausgangszustand ist das Flip-Flop Y₃ gesetzt, so daß seine über die Leitung Y1₃ abgerufene Ausgangsvariable den logischen Wert 1 hat. Damit steht das ODER-Gatter f₃ nunmehr über das UND-Gatter c₃ unter Strom, dem über die Leitung Y1₃ die Ausgangsvariable von Y₃ und über das ODER-Gatter v₃ die Ausgangsvariablen von X₀, X₁ und X₂ zugeschaltet sind. Damit ist der Betriebszustand q₃/Qs₃ geschaltet.

Die Umschaltvorgänge verlaufen wie folgt:

### Umschalten von q₁ auf q₂:

### Ausgangszustand:

Der Ausgangszustand ist derselbe wie der Endzustand beim Einschalten von q₁.

### 1. Stufe (zugleich Endstufe):

Ober die Leitung I₂, welche dem UND-Gatter X2₂ zugeschaltet ist, dessen Ausgang dem Setz-Eingang des Flip-Flops X₂ zugeschaltet ist, kommt als Impuls der Befehl zum Umschalten von q₁ auf q₂, wodurch das Flip-Flop X₂ gesetzt wird. Der logische Wert der Ausgangsvariablen von X₂ ändert sich damit von 0 auf 1. Die invertierte Ausgangsvariable von X₂ wird über die Leitung X3₂ abgerufen, welche den UND-Gattern X2₁, X2₃ und X2₀ zugeschaltet ist, wodurch das Setzen der Flip-Flops X₁, X₃ und X₀ verriegelt wird. Ein neuerlicher Schaltbefehl vor Beendigung des Umschaltens auf q₂ ist deshalb wirkungslos.

Die Leitung X3₂ ist auch einem Eingang des UND-Gatters Y5₂ zugeschaltet, dessen Ausgang über des ODER-Gatter Y7₂ dem Rücksetz-Eingang des Flip-Flops Y₂ zugeschaltet ist. Damit ist das Rücksetzen des Flip-Flops Y₂ neutralisiert, so daß es gesetzt werden kann, obwohl seinem Rücksetz-Eingang über die Leitung Y1₁ und das ODER-Gatter Y6₂, dessen Ausgang dem anderen Eingang des UND-Gatters Y5₂ zugeschaltet ist, die Ausgangsvariable des dem bestehenden Zustand q₁ zugeordneten, gesetzten Flip-Flops Y₁ zugeschaltet ist, welche den logischen Wert 1 hat. Die Ausgangsvariable von X₂ wird über die Leitung X1₂ abgerufen, welche einem Eingang des UND-Gatters Y2₂ zugeschaltet ist, dessen Ausgang dem Setz-Eingang des Flip-Flops Y₂ zugeschaltet ist. Dadurch wird des Setzen des Flip-Flops Y₂ aktiviert, welches somit über die Leitung Y3₂ erfolgen kann, welche dem anderen Eingang des UND-Gatters Y2₂ zugeschaltet ist.

Da das Flip-Flop Y₁ und das Flip-Flop X₂ gesetzt sind, sind die Leitungen Y1₁ und X1₂ unter Strom. Da dem UND-Gatter cr₁ die Leitung Y1₁ und über das ODER-Gatter v₁ die Leitung X1₂ zugeschaltet sind (Fig. 7), kommt einerseits der Eingang des UND-Gatters gl₂, welchem der Ausgang von cr₁ zugeschaltet ist, unter Strom und wird andererseits das Zeitschaltelement Tl₂ gesetzt, dessen Ausgang dem anderen Eingang des UND-Gatters gl₂ invertiert zugeschaltet ist. Solange des Zeitschaltelement Tl₂ noch nicht geschaltet hat, ist der Schaltzustand Qs₂ des Stellglied-Systems zur Herbeiführung der Drehzahl q₂ über das UND-Gatter gl₂ und das ODER-Gatter f₂ geschaltet. Wenn das Zeitschaltelement Tl₂ schaltet, also die Drehzahl q₂ hinlanglich herbeigeführt ist, kommt über das ODER-Gatter q die Leitung Y3₂ unter Strom, über welche das Flip-Flop Y₂, dessen Setzen aktiviert ist, gesetzt wird (Fig. 6). Der logische Wert der Ausgangsvariablen von Y₂ ändert sich damit von 0 auf 1.

Die Ausgangsvariable von Y₂ wird über die Leitung Y1₂ abgerufen, welche über das ODER-Gatter Y6₁ einem Eingang des UND-Gatters Y5₁ zugeschaltet ist, dessen Ausgang über das ODER-Gatter Y7₁ dem Rücksetz-Eingang des Flip-Flops Y₁ zugeschaltet ist. Da dem anderen Eingang des UND-Gatters Y5₁ über die Leitung X3₁ die invertierte Ausgangsvariable des Flip-Flops X₁ zugeschaltet ist, welche den logischen Wert 1 hat, wird dadurch das Flip-Flop Y₁ rückgesetzt. Damit ändert sich der logische Wert der Ausgangsvariablen von Y₁ von 1 auf 0. Die Ausgangsvariable von Y₁ wird über die Leitung Y1₁ abgerufen, welche einem Eingang des ODER-Gatters Y6₂ zugeschaltet ist, dessen Ausgang invertiert einem Eingang des UND-Gatters Y4₂ zugeschaltet ist, dessen Ausgang dem Rücksetz-Eingang des Flip-Flops X₂ zugeschaltet ist. Da das Flip-Flop Y₃, dessen Ausgangsvariable mit dem logischen Wert 0 über die Leitung Y1₃ dem anderen Eingang des ODER-Gatters Y6₂ zugeschaltet ist, nicht gesetzt ist und das Flip-Flop Y₂, dessen Ausgangsvariable mit dem logischen Wert 1 dem anderen Eingang des UND-Gatters Y4₂ zugeschaltet ist, gesetzt ist, wird das Flip-Flop X₂ rückgesetzt.

Das UND-Gatter Y4₂ und das ODER-Gatter Y6₂ bilden dabei nach dem Gesetz von De Morgan eine Schalteinrichtung zur logischen UND-Verknüpfung der über die Leitung Y1₂ zugeschalteten und der über die Leitungen Y1₁ und Y1₃ zugeleiteten, invertierten Variablen (etwa Groh, H., Weber, W., a.a.O., Seite 57).

### Endzustand:

Der Endzustand ist derselbe wie beim Einschalten von q₂.

### Umschalten von q₂ auf q₃:

### Ausgangszustand:

Der Ausgangszustand ist derselbe wie der Endzustand beim Einschalten von q₂ bzw. beim Umschalten von q₁ auf q₂.

### 1. Stufe (zugleich Endstufe):

Die erste Stufe verläuft in Analogie zur 1. Stufe beim Umschalten von q₁ auf q₂ bzw. der 3. Stufe beim Einschalten von q₃ über: I₃, X2₃, X₃ (welches gesetzt wird), X3₃, Y5₃, Y7₃, X1₃, Y2₃, Y₃ (dessen Rücksetzen neutralisiert und dessen Setzen aktiviert wird), X1₃, cr₂, f₃, T₃, Y3₃, Y2₃, Y₃ (Da das Rücksetzen des Flip-Flops Y₃ neutralisiert und sein Setzen aktiviert ist, wird es gesetzt), Y1₃, Y6₂, Y5₂, Y7₂, Y₂ (welches rückgesetzt wird), Y1₂, Y4₂, X₃ (welches rückgesetzt wird).

### Endzustand:

Der Endzustand ist derselbe wie beim Einschalten von q₃.

### Umschalten von q₁ auf q₃:

### Ausgangszustand:

Der Ausgangszustand ist derselbe wie der Endzustand beim Einschalten von q₁.

### 1. Stufe:

Die erste Stufe verlauft in Analogie zur 1. Stufe beim Umschalten von q₁ auf q₂ über: I₃, X2₃, X₃ (welches gesetzt wird), X3₃, Y5₃, Y7₃, X1₃, Y2₃, Y₃ (dessen Rücksetzen neutralisiert und dessen Setzen aktiviert wird), X1₃, v₁, cr₁, gl₂, f₂, Tl₂ (Da jedoch das Setzen des Flip-Flops Y₂ nicht aktiviert ist, wird es nicht gesetzt).

### 2. Stute:

Die zweiten Stufe verläuft in Analogie zur 1. Stufe beim Umschalten von q₂ auf q₃ über: hl₂, f₃, T₃, Y3₃, Y2₃, Y₃ (Da das Rücksetzen des Flip-Flops Y₃ neutralisiert und sein Setzen aktiviert ist, wird es gesetzt), Y1₃, Y6₁, Y5₁, Y7₁, Y₁ (welches rückgesetzt wird), Y1₁, Y6₃, Y4₃, X₃ (welches rückgesetzt wird).

### Endzustand:

Der Endzustand ist derselbe wie beim Einschalten von q₃.

Das Umschalten von q₃ auf q₂ erfolgt analog zum Umschalten von q₁ auf q₂, das Umschalten von q₂ auf q₁ erfolgt analog zum Umschalten von q₂ auf q₃ und das Umschalten von q₃ auf q₁ erfolgt analog zum Umschalten von q₁ auf q₃.

Die Ausschaltvorgänge verlaufen wie folgt:

### Ausschalten von q₁:

### Ausgangszustand:

Der Ausgangszustand ist derselbe wie der Endzustand beim Einschalten von q₁.

### 1. Stufe (zugleich Endstufe):

Über die Leitung I₀, welche dem UND-Gatter X2₀ zugeschaltet ist, dessen Ausgang dem Setz-Eingang des Flip-Flops X₀ zugeschaltet ist, kommt als Impuls der Befehl zum Ausschalten von q₁, wodurch das Flip-Flop X₀ gesetzt wird. Der logische Wert der Ausgangsvariablen von X₀ ändert sich damit von 0 auf 1. Die Ausgangsvariable von X₀ wird über die Leitung X1₀ abgerufen, welche einem Eingang des UND-Gatters cl₁ und invertiert einem Eingang des UND-Gatters c₁ zugeschaltet ist (Fig. 7). Damit steht das ODER-Gatter f₁ nicht mehr unter Strom, so daß der Schaltzustand Qs₀ des Stellglied-Systems zur Herbeiführung der Drehzahl q₀ = 0 geschaltet ist. Andererseits wird, da dem anderen Eingang des UND-Gatters cl₁ über die Leitung Y1₁ die Ausgangsvariable des gesetzten, dem bestehenden Zustand zugeordneten Flip-Flops Y₁ mit dem logischen Wert 1 zugeschaltet ist, das Zeitschaltelement T₀ (durch seine Eingangsvariable t₀) gesetzt, welchem der Ausgang des UND-Gatters cl₁ zugeschaltet ist. Die Verzögerungszeit von T₀ ist so bemessen, daß sich während ihres Ablaufs, ausgehend von der Drehzahl q₁, die Drehzahl q₀ = 0 mit hinlänglicher Annäherung einstellt. Wenn T₀ schaltet, wird durch seine Ausgangsvariable t'₀ als Freigabevariabler über die Leitung Y3₀ und das ODER-Gatter Y7₁ das Flip-Flop Y₁ rückgesetzt (Fig. 6). Der logische Wert der Ausgangsvariablen von Y₁ ändert sich damit von 1 auf 0. Die invertierte Ausgangsvariable von Y₁ ist, wie auch die invertierten Ausgangsvariablen von Y₂ und Y₃, dem UND-Gatter Y zugeschaltet, dessen Ausgang dem Rücksetz-Eingang des Flip-Flops X₀ zugeschaltet ist. Da auch die Flip-Flops Y₂ und Y₃ rückgesetzt sind und ihre invertierten Ausgangsvariablen den logischen Wert 1 haben, wird das Flip-Flop X'₀ rückgesetzt, so daß ein neuerlicher Schaltbefehl wirksam ist.

### Ausschalten von q₂:

### Ausgangszustand:

Der Ausgangszustand ist derselbe wie der Endzustand beim Einschalten von q₂

### 1. Stufe:

Die erste Stufe verläuft in Analogie zur 1. Stufe beim Ausschalten von q₁ bzw. der 1. Stufe beim Umschalten von q₂ auf q₁ über: I₀, X2₀, X₀ (welches gesetzt wird), X1₀, v₂, cl₂, gr₁, f₁, Tr₁ (Da jedoch das Setzen des Flip-Flops Y₁ nicht aktiviert ist, wird dieses nicht gesetzt).

### 2. Stufe:

Die zweite Stufe verläuft in Analogie zur 1. Stufe beim Ausschalten von q₁ über: hr₁, T₀, Y3₀, Y7₂, Y₂ (welches rückgesetzt wird), Y, X₀ (welches rückgesetzt wird). Damit ist der Zustand q₀/Qs₀ geschaltet (Ausgangszustand beim Einschalten von q₁).

### Ausschalten von q₃:

### Ausgangszustand:

Der Ausgangszustand ist derselbe wie der Endzustand beim Einschalten von q₃.

### 1. Stufe:

Die erste Stufe verläuft in Analogie zur 1. Stufe beim Umschalten von q₃ auf q₁ bzw. der 1, Stufe beim Ausschalten von q₁ über: I₀, X2₀, X₀ (welches gesetzt wird), X1₀, v₃, cl₃, gr₂, f₂, Tr₂.

### 2. Stufe:

Die zweite Stufe verläuft in Analogie zur 2. Stufe beim Umschalten von q₃ auf q₁ über: hr₂, gr₁, f₁, Tr₁ (Da jedoch das Setzen des Flip-Flops Y₁ nicht aktiviert ist, wird dieses nicht gesetzt).

### 3. Stufe:

Die dritteStufe verläuft in Analogie zur 1. Stufe beim Ausschalten von q₁ über: hr₁, T₀, Y3₀, Y7₃, Y₃ (welches rückgesetzt wird), Y, X₀ (welches rückgesetzt wird). Damit ist der Zustand q₀/Qs₀ geschaltet (Ausgangszustand beim Einschalten von q₁).

Die Tabellen 5a, 5b und 5c zeigen die Logiktabelle für die in Fig. 7 gezeigte kombinatorische logische Schaltung in der zum ersten Anwendungsbeispiel analogen Weise.

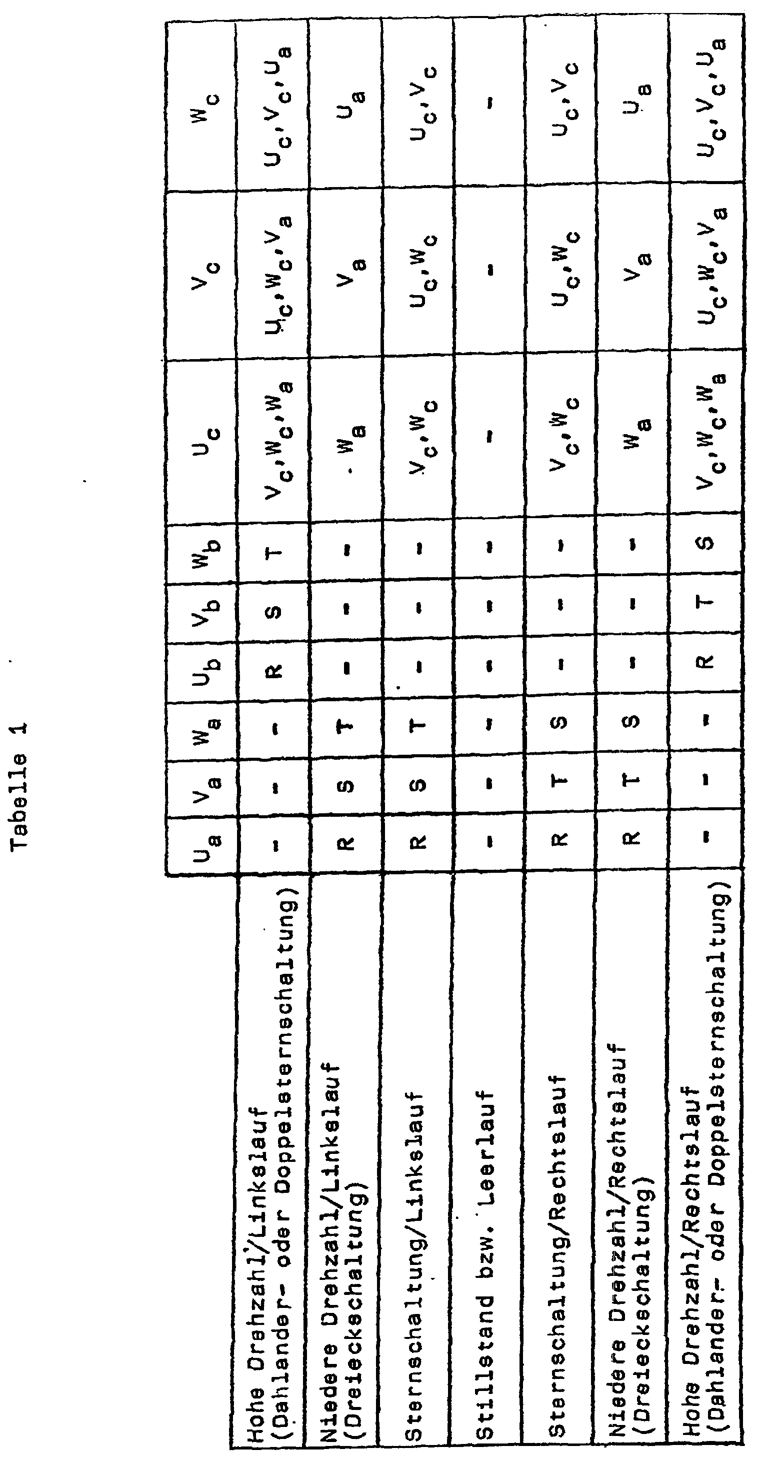

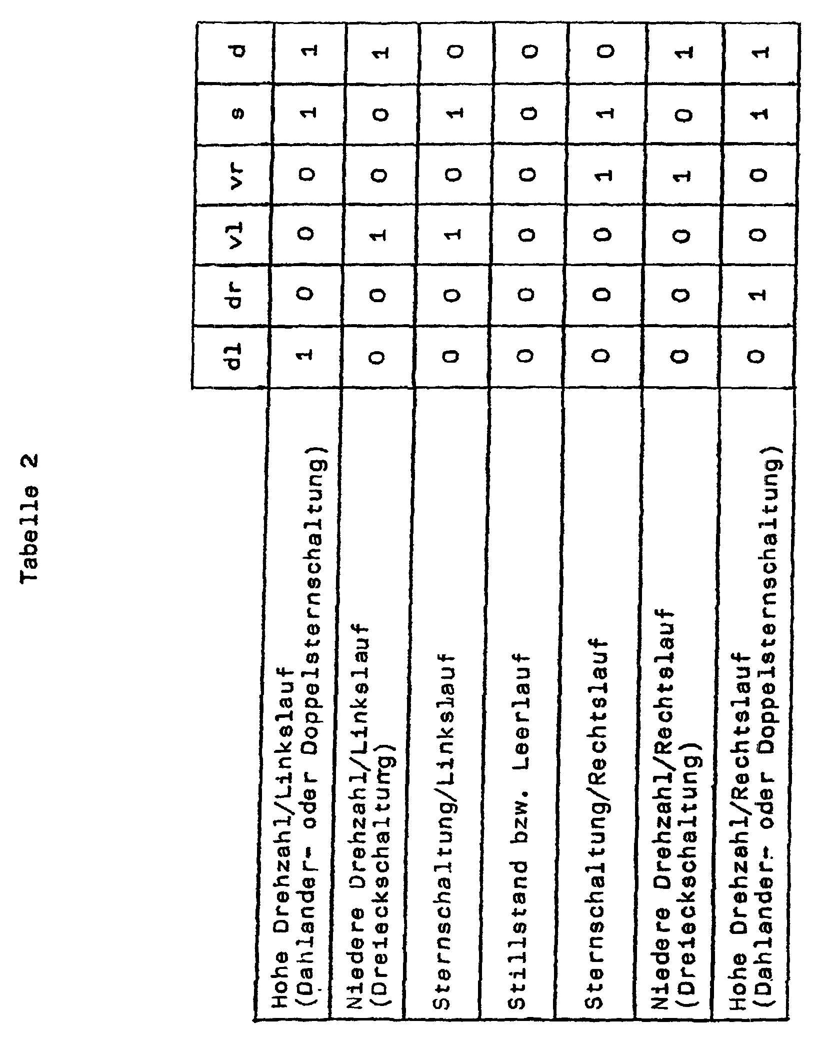

**Tabelle 3**

| dl | dr | ls | rs | ld | rd | s | d |
|---|---|---|---|---|---|---|---|
| 1 | | | | | | 1 | 1 |
| | 1 | | | | | 1 | 1 |
| | | 1 | | | | 1 | 0 |
| | | | 1 | | | 1 | 0 |
| | | | | 1 | | 0 | 1 |
| | | | | | 1 | 0 | 1 |

**Tabelle 4a**

| y | x | dl | ld | ls | rs | rd | dr | vl | vr |
|---|---|---|---|---|---|---|---|---|---|
| -2 | - | 1 | 0 | 0 | 0 | 0 | 0 | 0 | 0 |
| - 1 | - | 0 | 1 | 0 | 0 | 0 | 0 | 1 | 0 |
| - | - | 0 | 0 | 0 | 0 | 0 | 0 | 0 | 0 |
| +1 | - | 0 | 0 | 0 | 0 | 1 | 0 | 0 | 1 |
| +2 | - | 0 | 0 | 0 | 0 | 0 | 1 | 0 | 0 |

**Tabelle 4b**

| y | x | sr'ₐ | sl'₊₁ | srₐ | sl₊₁ | s₊₂ | dl | ld | ls | rs | rd | dr | vl | vr |
|---|---|---|---|---|---|---|---|---|---|---|---|---|---|---|
| - | +1 | 0 | 0 | 1 | 0 | 0 | 0 | 0 | 0 | 1 | 0 | 0 | 0 | 1 |
| | | 1 | 0 | 1 | 1 | 0 | 0 | 0 | 0 | 0 | 1 | 0 | 0 | 1 |
| - | +2 | 0 | 0 | 1 | 0 | 0 | 0 | 0 | 0 | 1 | 0 | 0 | 0 | 1 |
| | | 1 | 0 | 1 | 1 | 0 | 0 | 0 | 0 | 0 | 1 | 0 | 0 | 1 |
| | | 1 | 1 | 1 | 1 | 1 | 0 | 0 | 0 | 0 | 0 | 1 | 0 | 0 |

**Tabelle 4c**

| y | x | sl'₋₁ | sr'ᵤ | sr'₊₁ | sl₋₁ | srᵤ | sr₊₁ | s₊₂ | dl | ld | ls | rs | rd | dr | vl | vr |
|---|---|---|---|---|---|---|---|---|---|---|---|---|---|---|---|---|
| - 2 | -1 | 0 | 0 | 0 | 1 | 0 | 0 | 0 | 0 | 1 | 0 | 0 | 0 | 0 | 1 | 0 |
| -0 | +1 | 0 | 0 | 0 | 1 | 0 | 0 | 0 | 0 | 1 | 0 | 0 | 0 | 0 | 1 | 0 |
| | | 1 | 0 | 0 | 1 | 1 | 0 | 0 | 0 | 0 | 0 | 1 | 0 | 0 | 0 | 1 |
| | | 1 | 1 | 0 | 1 | 1 | 1 | 0 | 0 | 0 | 0 | 0 | 1 | 0 | 0 | 1 |
| -2 | +2 | 0 | 0 | 0 | 1 | 0 | 0 | 0 | 0 | 1 | 0 | 0 | 0 | 0 | 1 | 0 |
| | | 1 | 0 | 0 | 1 | 1 | 0 | 0 | 0 | 0 | 0 | 1 | 0 | 0 | 0 | 1 |
| | | 1 | 1 | 0 | 1 | 1 | 1 | 0 | 0 | 0 | 0 | 0 | 1 | 0 | 0 | 1 |
| | | 1 | 1 | 1 | 1 | 1 | 1 | 1 | 0 | 0 | 0 | 0 | 0 | 1 | 0 | 0 |
| - 1 | +1 | 0 | 0 | 0 | 0 | 1 | 0 | 0 | 0 | 0 | 0 | 1 | 0 | 0 | 0 | 1 |
| | | 0 | 1 | 0 | 0 | 1 | 1 | 0 | 0 | 0 | 0 | 0 | 1 | 0 | 0 | 1 |
| -1 | +2 | 0 | 0 | 0 | 0 | 1 | 0 | 0 | 0 | 0 | 0 | 1 | 0 | 0 | 0 | 1 |
| | | 0 | 1 | 0 | 0 | 1 | 1 | 0 | 0 | 0 | 0 | 0 | 1 | 0 | 0 | 1 |
| | | 0 | 1 | 1 | 0 | 1 | 1 | 1 | 0 | 0 | 0 | 0 | 0 | 1 | 0 | 0 |
| +1 | +2 | 0 | 0 | 0 | 0 | 0 | 0 | 1 | 0 | 0 | 0 | 0 | 0 | 1 | 0 | 0 |

**Tabelle 4d**

| y | x | sl'₋₁ | sl₋₁ | slₒ | dl | ld | ls | ls | rs | rd | dr | vl | vr |
|---|---|---|---|---|---|---|---|---|---|---|---|---|---|
| -2 | 0 | 0 | 1 | 0 | 1 | 0 | 0 | 0 | 0 | 0 | 0 | 1 | 0 |
| | | 1 | 1 | 1 | 0 | 0 | 0 | 0 | 1 | 0 | 0 | 0 | 1 |
| -1 | 0 | 0 | 0 | 1 | 0 | 0 | 0 | 0 | 1 | 0 | 0 | 0 | 1 |

**Tabelle 5a**

| Y | X | f₁ | f₂ | f₃ |
|---|---|---|---|---|
| - | - | 0 | 0 | 0 |
| 1 | - | 1 | 0 | 0 |
| 2 | - | 0 | 1 | 0 |
| 3 | - | 0 | 0 | 0 |

**Tabelle 5b**

| Y | X | tl'₁ | tl'₂ | tl₁ | tl₂ | t₃ | f₁ | f₂ | f₃ |
|---|---|---|---|---|---|---|---|---|---|
| 0 | 1 | 0 | 0 | 1 | 0 | 0 | 1 | 0 | 0 |
| 0 | 2 | 0 | 0 | 1 | 0 | 0 | 1 | 0 | 0 |
| | | 1 | 0 | 1 | 1 | 0 | 0 | 1 | 0 |
| 0 | 3 | 0 | 0 | 1 | 0 | 0 | 1 | 0 | 0 |
| | | 1 | 0 | 1 | 1 | 0 | 0 | 1 | 0 |
| | | 1 | 1 | 1 | 1 | 1 | 0 | 0 | 1 |
| 1 | 2 | 0 | 0 | 0 | 1 | 0 | 0 | 1 | 0 |
| 1 | 3 | 0 | 0 | 0 | 1 | 0 | 0 | 1 | 0 |
| | | 0 | 1 | 0 | 1 | 1 | 0 | 0 | 1 |
| 2 | 3 | 0 | 0 | 0 | 0 | 1 | 0 | 0 | 1 |

**Tabelle 5c**

| Y | X | tr'₂ | tr'₁ | tr₂ | tr₁ | t₀ | f₁ | f₂ | f₃ |
|---|---|---|---|---|---|---|---|---|---|
| 3 | 2 | 0 | 0 | 1 | 0 | 0 | 0 | 1 | 0 |
| 3 | 1 | 0 | 0 | 1 | 0 | 0 | 0 | 1 | 0 |
| | | 1 | 0 | 1 | 1 | 0 | 1 | 0 | 0 |
| 2 | 1 | 0 | 0 | 0 | 1 | 0 | 1 | 0 | 0 |
| 3 | 0 | 0 | 0 | 1 | 0 | 0 | 0 | 1 | 0 |
| | | 1 | 0 | 1 | 1 | 0 | 1 | 0 | 0 |
| | | 1 | 1 | 1 | 1 | 1 | 0 | 0 | 0 |
| 2 | 0 | 0 | 0 | 0 | 1 | 0 | 1 | 0 | 0 |
| | | 0 | 1 | 0 | 1 | 1 | 0 | 0 | 0 |
| 1 | 0 | 0 | 0 | 0 | 0 | 1 | 0 | 0 | 0 |

## Patentansprüche

1. Verfahren zum Schalten vom bestehenden auf einen herbeizuführenden Zustand eines Geräts mit mehreren herbeiführbaren Zuständen, zu deren Herbeiführung jeweils der logische Status an der Ausgangsseite (x1₋₂, x1₋₁, x1₀, x1₊₁, x1₊₂; X1₀, X1₁, X1₂, X1₃, X3₀, X3₁, X3₂, X3₃) einer ersten speichernden Einrichtung (x₋₂, x₋₁, x₀, x₊₁, x₊₂, x3₋₁, x3₀, x3₊₁ x3₊₂; X₀, X₁, X₂, X₃) geändert wird, wobei dieser nach der Änderung dem herbeizuführenden Zustand entpricht, **dadurch gekennzeichnet, daß** bei der Änderung des logischen Status an der Ausgangsseite (x1₋₂, x1₋₁, x1₀, x1₊₁, x1₊₂; X1₀, X1₁, X1₂, X1₃, X3₀ X3₁ X3₂, X3₂) der ersten speichernden Einrichtung (x₋₂, x₋₁, x₀, x₊₁, x₊₂, x3₋₁, x3₊₁, x3₊₂; X₀, X₁, X₂, X₃) der logische Status an der Ausgangsseite (y1₋₂, y1₋₁, y1₊₁, y1₊₂; Y1₁, Y1₂, Y1₃) einer zweiten speichernden Einrichtung (y₋₂, y₋₁, y₊₁, y₊₂; Y₁, Y₂, Y₃) unverändert bleibt, wobei dieser dem bestehenden Zustand entspricht.

2. Verfahren nach Anspruch 1 zum Einschalten, wobei eine dem herbeizuführenden Zustand zugeordnete Teil-Einrichtung (x₋₂, x3₋₂ bzw. x₋₁, x3₋₁ bzw. x₊₁, x3₊₁ bzw. x₊₂, x3₊₂; X₁ bzw. X₂ bzw. X₃) der ersten speichernden Einrichtung gesetzt wird, **dadurch gekennzeichnet, daß** das Setzen einer dem herbeizuführenden Zustand zugeordneten Teil-Einrichtung (y₋₂ bzw. y₋₁ bzw. y₊₁ bzw. y₊₂; Y₁ bzw. Y₂ bzw. Y₃) der zweiten speichernden Einrichtung aktiviert wird und nach der Herbeiführung des herbeizuführenden Zustands diese gesetzt wird.

3. Verfahren nach Anspruch 2 zum Umschalten, **dadurch gekennzeichnet, daß** das Löschen der dem herbeizuführenden Zustand zugeordneten Teil-Einrichtung (y₋₂ bzw, y₋₁ bzw. y₊₁ bzw. y₊₂; Y₁ bzw. Y₂ bzw. Y₃) der zweiten speichernden Einrichtung neutralisiert wird und die dem bestehend gewesenen Zustand zugeordnete Teil-Einrichtung (y_{-1(+1,+2)} bzw. y_{-2(+1,+2)} bzw. y_{-2(-1,+2)} bzw. y_{-2(-1,+1)}; Y₂₍₃₎ bzw. Y₁₍₃₎ bzw. Y₂₍₃₎) der zweiten speichernden Einrichtung nach dem Setzen der dem herbeigeführten Zustand zugeordneten Teil-Einrichtung (y₋₂ bzw, y₋₁ bzw. y₊₁ bzw, y₊₂; Y₁ bzw. Y₂ bzw. Y₃) der zweiten speichernden Einrichtung gelöscht wird.

4. Verfahren nach Anspruch 3, **dadurch gekennzeichnet, daß** die dem herbeigeführten Zustand zugeordnete Teil-Einrichtung (x₋₂, x3₋₂ bzw. x₋₁, x3₁ bzw. x₊₁, x3₊₁ bzw. x₊₂, x3₊₂; X₁ bzw. X₂ bzw. X₃) der ersten speichernden Einrichtung nacn dem Löschen der dem bestehend gewesenen Zustand zugeordneten Teil-Einrichtung (y_{-1(+1,+2)} bzw. y_{-2(+1,+2)} bzw. y_{-2(-1,+1)} bzw. y_{-2(-1,+1)}; Y₂₍₃₎ bzw. Y₁₍₃₎ bzw. Y₁₍₂₎) der zweiten speichernden Einrichtung gelöscht wird.

5. Verfahren nach Anspruch 1 zum Ausschalten, **dadurch gekennzeichnet, daß** eine dem Stillstand zugeordnete Teil-Einrichtung (x₀, x3₀; X₀) der ersten speichernden Einrichtung gesetzt wird und die dem bestehend gewesenen Zustand zugeordnete Teil-Einrichtung (y_{-2(-1,+1,+2)}; Y_{1(2,3)}) der zweiten speichernden Einrichtung nach Herbeiführung des Stillstands gelöscht wird.

6. Verfahren nach Anspruch 2, wobei das Setzen von Teil-Einrichtungen (x₋₁, x3₋₁; x₀, x3₀; x₊₁, x3₊₁; x₊₂, x3₊₂ bzw. x₋₂, x3₋₂; x₀, x3₀; x₊₁, x3₊₁; x₊₂, x3₊₂ bzw. x₋₂, x3₋₂; x₋₁, x3₋₁; x₀, x3₀; x₊₂, x3₊₂ bzw. x₋₂, x3₋₂; x₋₁, x3₋₁; x₀, x3₀; x₊₁, x3₊₁; X₀, X₂, X₃ bzw. X₀, X₁, X₃ bzw, X₀, X₁, X₂) der ersten speichernden Einrichtung verriegelt wird, welche von der Teil-Einrichtung (x₋₂, x3₋₂ bzw, x₋₁, x3₋₁ bzw, x₊₁, x3₊₁ bzw, x₊₂, x3₊₂; X₁ bzw, X₂ bzw, X₃) der ersten speichernden Einrichtung verschieden sind, welche dem herbeizuführenden Zustand zugeordnet ist, **dadurch gekennzeichnet, daß** die dem herbeigeführten Zustand zugeordnete Teil-Einrichtung (x₋₂, x3₂ bzw. x₋₁, x3₁ bzw. x₋₁₋₁ bzw. x₊₁, x3₊₁ bzw. x₊₂, x₊₂; X₁ bzw. X₂ bzw. X₃) der ersten speichernden Einrichtung nach dem Setzen der dem herbeigeführten Zustand zugeordneten Teil-Einrichtung (y₋₂ bzw. y₋₁ bzw. y₊₁ bzw. y₊₂; Y₁ bzw. y₂ bzw. Y₃) der zweiten speichernden Einrichtung gelöscht wird.

7. Verfahren nach Anspruch 5, wobei das Setzen von Teil-Einrichtungen (x₋₂, x3₋₂; x₋₁, x3₋₁; x₊₁ , x3₊₁; x₊₂, x3₊₂ bzw.; X₂, X₃ bzw. X₁, X₃ bzw. X₁, X₂) der ersten speichernden Einrichtung verriegelt wird, welche von der Teil-Einrichtung (x₀, x3₀; X₀) der ersten speichernden Einrichtung verschieden sind, welche dem Stillstand zugeordnet ist, **dadurch gekennzeichnet, daß** die dem Stillstand zugeordnete Teil-Einrichtung (x₀, x3₀; X₀) der ersten speichernden Einrichtung nach Herbeiführung des Stillstands glöscht wird.

8. Anordnung zur Durchführung des Verfahrens nach Anspruch 2 mit einer ersten speichernden Einrichtung (x₋₂, x₋₁, x₊₁, x₊₂, x3₋₁, x3₊₁, x3₊₂; X₁, x₂, X₃) mit einer Ausgangsseite (x1₋₂, x1₋₁, x1₊₁, x1₊₂, x3₋₁, x3₊₁, x3₊₂; x1₁, x1₂, x1₃, X3₁, X3₂, X3₃) und einer Mehrzahl von Teil-Einrichtungen (x₋₂ bzw. x₋₁, x3₋₁ bzw. x₊₁, x3₊₁ bzw. x₊₂, x3₊₂; X₁ bzw. X₂ bzw. X₃) mit jeweils einer Teil-Ausgangsseite (x1₋₂, bzw, x1₋₁, x3₋₁ bzw. x1₊₁, x3₊₁ bzw. x1₊₂, x3₊₂; X1₁, X3₁ bzw. X1₂, X3₂ bzw. X1₃, X3₃), **gekennzeichnet durch** eine zweite speichernde Einrichtung (y₋₂, y₋₁, y₊₁, y₊₂; Y₁, Y₂, Y₃) mit einer Ausgangsseite (y1₋₂, y1₋₁, y1₊₁, y1₊₂; Y1₁, Y1₂, Y1₃) und einer Mehrzahl von Teil-Einrichtungen (y₋₂ bzw. y₋₁ bzw. y₊₁ bzw. y₊₂; Y₁ bzw. Y₂ bzw. Y₃) mit jeweils einer Teil-Ausgangsseite (y1₋₂ bzw. y1₋₁ bzw. y1₊₁ bzw. y1₊₂; Y1₁ bzw. Y1₂ bzw. Y1₃) und mit jeweils einer ersten Vorschalteinrichtung (beispielsweise y6₋₁, y2₋₁ bzw. y3₊₁, y2₊₁ bzw. y3₊₂, y2₊₂; Y2₁ bzw. Y2₂ bzw. Y2₃) mit einem oder mehreren Eingängen für Setz-Variable und einem Eingang für eine Variable zum Aktivieren der Setz-Variablen, wobei die Teil-Einrichtungen (x₋₂ bzw. x₋₁, x3₋₁ bzw. x₊₁, x3₊₁ bzw. x₊₂, x3₊₂; X₁ bzw. X₂ bzw. X₃) der ersten speichernden Einrichtung und die Teil-Einrichtungen (y₋₂ bzw. y₋₁ bzw. y₊₁ bzw y₊₂; Y₁ bzw. Y₂ bzw. Y₃) der zweiten speichernden Einrichtung jeweils einander zugeordnet sind und wobei bei den Teil-Einrichtungen (x₋₂, bzw. x₁, x3₋₁ bzw. x₊₁, x3₊₁ bzw. x₊₂, x3₊₂; X₁ bzw. X₂ bzw. X₃) der ersten speichernden Einrichtung jeweils die Teil-Ausgangsseite (beispielsweise x3₋₁ bzw. x3₊₁ bzw. x3₊₂; X1₁ bzw. X1₂ bzw. X1₃) dem Eingang für die Variable zum Aktivieren der Setz-Variablen der ersten Vorschalteinrichtung der zugeordneten Teil-Einrichtung (y₋₂ bzw. y₋₁ bzw. y₊₁ bzw. y₊₂; Y₁ bzw. Y₂ bzw. Y₃) der zweiten speichernden Einrichtung zugeschaltet ist.

9. Anordnung nach Anspruch 8 zur Durchführung des Verfahrens nach Anspruch 3, **gekennzeichnet durch** eine zweite Vorschalteinrichtung (beispielsweise y$\frac{\text{-1}}{\text{-2}}$, y$\frac{\text{+1}}{\text{-2}}$ y$\frac{\text{+2}}{\text{-2}}$ bzw. y$\frac{\text{-2}}{\text{-1}}$, y$\frac{\text{+1}}{\text{-1}}$, y$\frac{\text{+2}}{\text{-1}}$, y5₋₁ bzw. y$\frac{\text{-2}}{\text{+1}}$, y$\frac{\text{-1}}{\text{+1}}$, y$\frac{\text{+2}}{\text{+1}}$; y5₊₁; Y7₁ bzw. Y7₂ bzw. Y7₃) jeweils einer Teil-Einrichtung (y₋₂ bzw. y₋₁ bzw. y₊₁ bzw. y₊₂; Y₁ bzw. Y₂ bzw. Y₃) der zweiten speichernden Einrichtung mit einem oder mehreren Eingängen für Lösch-Variable und einem Eingang für eine Variable zum Neutralisieren der Lösch-Variablen, wobei bei den Teil-Einrichtungen (x₋₂ bzw. x₋₁, x3₋₁ bzw. x₊₁, x3₊₁ bzw. x₊₂, x3₊₂; X₁ bzw. X₂ bzw. X₃) der ersten speichernden Einrichtung jeweils die Teil-Ausgangsseite (x1₋₂ bzw. x1₋₁ bzw. x1₊₁ bzw. x1₊₂; X3₁ bzw. X3₂ bzw. X3₃) dem Eingang für die Variable zum Neutralisieren der Lösch-Variablen der zweiten Vorschalteinrichtung der zugeordneten Teil-Einrichtung (y₋₂ bzw. y₋₁ bzw. y₊₁ bzw. y₊₂; Y₁ bzw. Y₂ bzw. Y₃) der zweiten speichernden Einrichtung zugeschaltet ist und **dadurch**, daß bei den Teil-Einrichtungen (y₋₂ bzw. y₋₁ bzw. y₊₁ bzw. y₊₂; Y₁ bzw. Y₂ bzw. Y₃) der zweiten speichernden Einrichtung jeweils die Teil-Ausgangsseite (y1₋₂ bzw. y1₋₁ bzw. y1₊₁ bzw. y1₊₂; Y1₁ bzw. Y1₂ bzw. Y3₃) jeweils dem Eingang für die Lösch-Variable der zweiten Vorschalteinrichtung der Teil-Einrichtungen (y₋₂ bzw. y₋₁ bzw. y₊₁ bzw. y₊₂; Y₁ bzw. Y₂ bzw. Y₃) der zweiten speichernden Einrichtung zugeschaltet ist, welche von de Teil-Einrichtung der zweiten speichernden Einrichtung verschieden sind.

10. Anordnung nach Anspruch 9 zur Durchführung des Verfahrens nach Anspruch 4, **dadurch gekennzeichnet, daß** einem Eingang zum Löschen einer Teil-Einrichtung der ersten speichernden Einrichtung jeweils der Ausgang einer Schalteinrichtung (beispielsweise y$\frac{\text{-1}}{\text{-2}}$, y$\frac{\text{+1}}{\text{-2}}$, y$\frac{\text{+2}}{\text{-2}}$ bzw. y$\frac{\text{-2}}{\text{-1}}$, y$\frac{\text{+1}}{\text{-1}}$, y$\frac{\text{+2}}{\text{-1}}$; Y4₁ bzw. Y4₂ bzw. Y4₃) zur logischen UND-Verknüpfung zugeschaltet ist, deren Eingangsseite der Ausgang der zugeordneten Teil-Einrichtung der zweiten speichernden Einrichtung und invertiert die der zweiten Vorschalteinrichtung dieser Teil-Einrichtung der zweiten speichernden Einrichtung zugeschalteten Lösch-Variablen zugeschaltet sind.

11. Anordnung nach Anspruch 8 zur Durchführung des Verfahrens nach Anspruch 6, wobei bei den Teil-Einrichtungen der ersten speichernden Einrichtung jeweils die Teil-Ausgangsseite jeweils einem Eingang zum Verriegeln des Setzens der Teil-Einrichtungen der ersten speichernden Einrichtung zugeschaltet ist, welche von den Teil-Einrichtungen der ersten speichernden Einrichtung verschieden sind, **dadurch gekennzeichnet, daß** bei den Teil-Einrichtungen der zweiten speichernden Einrichtung jeweils die Teil-Ausgangsseite (y einem Eingang zum Löschen der zugeordneten Teil-Einrichtung (x₋₂, x3₋₂ bzw. x₋₁, x3₋₁ bzw. x₊₁, x3₊₁ bzw. x₊₂, x3₊₂; X₁ bzw. X₂ bzw. X₃) der ersten speichernden Einrichtung zugeschaltet ist.

## Claims

1. Process for switching over from the present state to a state to be arranged of an apparatus with a plurality of arrangables states, wherein for arranging these arrangables states respectively the logical status on the output-side (x1₋₂, x1₋₁, x1₀, x1₊₁, x1₊₂, x3₋₂, x3₋₁, x3₊₁, x3₊₂; X1₀, X1₁, X1₂, X1₃, X3₀, X3₁, X3₂, X3₃) of a first memorising installation (x₋₂, x₋₁, x₀, x₊₁, x₊₂, x3₋₂, x3₋₁, x3₀, x3₊₁, x3₊₂; X₀, X₁, X₂, X₃) is changed such as after changing it corresponds to the state to be arranged, **characterised in that** when changing the logical status on the output-side (x1₋₂, x1₋₁, x1₀, x1₊₁, x1₊₂, x3₋₂, x3₋₁, x3₊₁ x3₊₂; X1₀, X1₁, X1₂, X1₃, X3₀, X3₁, X3₂, X3₃) of the first memorising installation (x₋₂, x₋₁, x₀, x₊₁, x₊₂, x3₋₂, x3₋₁, x3₀, x3₊₁, x3₊₂; X₀, X₁, X₂, X₃) the logical status on the output-side (y1₋₂, y1₋₁, y1₊₁, y1₊₂, y4₋₂, y4₋₁, y4₊₁, y4₊₂; Y₁, Y₂, Y₃) of a second memorising installation (y₋₂, y₋₁, y₊₁, y₊₂; Y₁, Y₂, Y₃) remains unchanged and corresponds to the present state.

2. Process according to claim 1 for switching-on, wherein is charged a partial installation (x₋₂, x3₋₂; x₋₁, x3₋₁; x₊₁, x3₊₁; x₊₂, x3₊₂; resp.; X₁; X₂; X₃; resp.), which is associated to the state to be arranged, of the first memorising installation, **characterised in that** charging is activated of a partial installation (y₊₂, y₋₁, y₊₁, y₊₂, resp.; Y₁, Y₂, Y₃, resp.), which is associated to the state to be arranged, of the second memorising installation und after arranging the state to be arranged this is charged.

3. Process according to claim 2 for switching-over, **characterised in that** cancelling is neutralised of the partial installation (y₋₂, y₋₁, y₊₁, y₊₂, resp.; Y₁, Y₂, Y₃, resp.), which is associated to the state to be arranged, of the second memorising installation, and the partial installation (y_{-1(+1,+2)}, y_{-2(+1,+2)}, y_{-2(-1,+2)}, y_{-2(-1,+1)}, resp.; Y₂₍₃₎, Y₁₍₃₎, Y₁₍₂₎, resp.), which is associated to the state, that was present, of the second memorising installation, is cancelled after charging the partial installation (y₋₂, y₋₁, y₊₁, y₊₂, resp.; Y₁, Y₂, Y₃, resp.), which is associated to the state, that has been arranged, of the second memorising installation.

4. Process according to claim 3, **characterised in that** the partial installation (x₋₂, x3₋₂; x₋₁, x3₋₁; x₊₁, x3₊₁; x₊₂, x3₊₂, resp.; X₁, X₂, X₃, resp.), which is associated to the state, that has been arranged, of the first memorising installation, is cancelled after cancelling the partial installation (y_{-1(+1,+2)}, y_{-2(+1,+2)}, y_{-2(-1,+2)}, y_{-2(-1,+1)}, resp.; Y₂₍₃₎, Y₁₍₃₎, Y₁₍₂₎, resp.), which is associated to the state, that was present, of the second memorising installation.

5. Process according to claim 1 for switching-off, **characterised in that** a partial installation (x₀, x3₀; X₀), which is associated to standstill, of the first memorising installation, is charged and after arranging standstill the partial installation (y_{-2(1,+1,+2)}; Y_{1(2,3)}), which is associated to the state, that was present, of the second memorising installation, is cancelled.

6. Process according to claim 2, wherein charging is blocked of partial installations (x₋₁, x3₋₁ | x₀, x3₀ | x₊₁, x3₊₁ | x₊₁, x3₊₁ | x₊₂, x3₊₂ ; x₋₂, x3₋₂ | x₀, x3₀ | x₊₁, x3₊₁ | x₊₂, x3₊₂ ; x₋₂, x3₋₂ | x₋₁, x3₋₁ | x₀, x3₀ | x₊₂, x3₊₂; x₋₂, x3₋₂ | x₋₁, x3₋₁ | x₀, x3₀ | x₊₁, x3₊₁; resp.; X₀, X₂, X₃; X₀, X₁, X₃ ; X₀, X₁, X₂; resp.) of the first memorising installation, which are different from the partial installation (x₋₂, x3₋₂; x₋₁, x3₋₁; x₊₁, x3₊₁; x₊₂, x3₊₂; resp.; X₁; X₂; X₃; resp.) of the first memorising installation, which is associated to the state to be arranged, **characterised in that** the partial installation (x₋₂, x3₋₂; x₋₁, x3₋₁; x₊₁, x3₊₁; x₊₂, x3₊₂; resp.; X₁; X₂; X₃; resp.), which is associated to the state, that has been aranged, of the first memorising installation, is cancelled after charging the partial installation (y₋₂, y₋₁, y₊₁, y₊₂; resp.; Y₁; Y₂; Y₃; resp.), which is associated to the state, that has been arranged, of the second memorising installation.

7. Process according to claim 5, werein charging is blocked of partial installations (x₋₂, x3₋₂ | x₋₁, x3₋₁ | x₊₁, x3₊₁ | x₊₂, x3₊₂; X₁, X₂, X₃), which are different from the partial installation (x₀, x3₀; X₀), which is associated to standstill, of the first memorising installation, **characterised in that** after arranging standstill the partial installation (x₀, x3₀; X₀), which is associated to standstill, of the first memorising installation, is cancelled.

8. Arrangement for performing the process according to claim 2 with a first memorising installation (x₋₂, x₋₁, x₀, x₊₁, x₊₂, x3₋₂, x3₋₁, x3₀, x3₊₁, x3₊₂; X₀, X₁, X₂, X₃) with an output-side (x1₋₂, x1₋₁, x1₀, x₊₁, x1₊₂, x3₋₂, x3₋₁, x3₊₁, x3₊₂; lines X1₀, X1₁, X1₂, X1₃, X3₀, X3₁, X3₂, X3₃) and a plurality of partial installations (x₋₂, x3₋₂; x₋₁, x3₋₁; x₀, x3₀; x₊₁, x3₊₁; x₊₂, x3₊₂; resp.; X₀; X₁; X₂; X₃; resp.), each with a partial output-side (x1₋₂, x3₋₂; x1₋₁, x3₋₁; x1₀; x1₊₁, x3₊₁; x1₊₂, x3₊₂; resp.; lines X1₀, X3₀; X1₁, X3₁; X1₂, X3₂; X1₃, X3₂; resp.), **characterised by** a second memorising installation (y₋₂, y₋₁, y₊₁, y₊₂; Y₁, Y₂, Y₃) with an output-side (y1₋₂, y1₁, y1₊₁, y1₊₂, y4₋₂, y4₋₁, y4₊₁, y4₊₂; lines Y1₁, Y1₂, Y1₃) and a plurality of partial installations (y₋₂, y₋₁, y₊₁, y₊₂, resp.; Y₁, Y₂, Y₃, resp.), each with a partial output-side (y1₂, y4₋₂; y1₋₁, y4₋₁; y1₊₁, y4₊₁; y1₊₂, y4₊₂; resp.; line Y1₁; Y1₂; Y1₃; resp.) and each with a first preswitching-device (y2₋₂, y3₋₂; y2₋₁, y6₋₁ for example; y2₊₁, y3₊₁ for example; y2₊₂, y3₊₂; resp.; Y2₁; Y2₂; Y2₃; resp.) with one or more than one inputs for charging-variables (y3₋₂, y6₋₁ for example, y3₊₁ for example, x3₊₂; resp.; line Y3₁, Y3₂, Y3₃, resp.) and an input for a variable to activate the charging-variables (y2₋₂, y2₋₁, y2₊₁, y2₊₂; resp.; line X1₁, X1₂, X1₃, resp.), wherein to each partial installation (y₋₂, y₋₁, y₊₁, y₊₂, resp.; Y₁, Y₂, Y₃, resp.) of the second memorising installation a partial installation (x₋₂, x3₋₂; x₋₁, x3₋₁; x₊₁, x3₊₁; x₊₂, x3₊₂; resp.; X₁, X₂, X₃, resp.) of the first memorising installation is associated and wherein for the input (y2₋₂, y2₋₁, y2₊₁, y2₊₂, resp.; line X1₁, X1₂, X1₃, resp.) for the variable to activate the charging-variables of the first preswitsching-device of each partial instaiiation (y₋₂, y₋₁, y₊₁, y₊₂, resp.; Y₁, Y₂, Y₃, resp.) of the second memorising installation the partial output-side (x3₋₂, x3₋₁, x3₊₁, x3₊₂, resp.; X1₁, X1₂, X1₃, resp.) of the partial installation (x₋₂, x3₋₂; x₋₁, x3₋₁; x₊₁, x3₊₁, x₊₂, x3₊₂, resp.; X₁, X₂, X₃, resp.) of the first memorising installation, which is associated to the partial installation (y₋₂, y₋₁, y₊₁, y₊₂, resp.; Y₁, Y₂, Y₃, resp.) of the second memorising installation, is connected.

9. Arrangement according to claim 8 for performing the process according to claim 3, **characterised by** a second preswitching-device (for example: y$\frac{\text{-1(+1,+2)}}{\text{-2}}$, y5₋₂; y$\frac{\text{-2(+1,+2)}}{\text{-1}}$, y5₋₁; y$\frac{\text{-2(-1,+2)}}{\text{+1}}$, y5₋₁; resp.; Y5₁, Y7₁; Y5₂, Y7₂; Y5₃, Y7₃; resp.) of each partial installation (y₋₂, y₋₁, y₊₁, y₊₂, resp.; Y₁, Y₂, Y₃, resp.) of the second memorising installation, each with one ore more inputs (for example: y$\frac{\text{-1(+1,+2)}}{\text{-2}}$, y$\frac{\text{-2(+1,+2)}}{\text{-1}}$, y$\frac{\text{-2(-1,+2)}}{\text{+1}}$, resp.; line Z₁, Z₂, Z₃, resp.) for cancelling-variables and an input (y5₂, y5₋₁, y5₊₁, y5₊₂, resp.; line X3₁, X3₂, x3₃, resp.) for a variable to neutralise the cancelling-variables, wherein the partial output-side of the partial installation of the first memorising installation which is associated to the partial installation of the second memorising installation is connected for the input for the variable to neutralise the cancelling-variables and wherein the partial output-side (y1₋₂, y1₋₁, y1₊₁, y1₊₂, resp.; line Y1₁, Y1₂, Y1₃, resp.) of each partial installation (y₋₂, y₋₁, y₊₁, y₊₂; Y₁, Y₂, Y3) of the second memorisung installation, is connected for an input for the cancelling-variable (for example: y$\frac{\text{-2}}{\text{-1(+1)}}$, for instance; y$\frac{\text{-1}}{\text{-2(+1)}}$, for instance; y$\frac{\text{+1}}{\text{-2(-1)}}$, for instance; resp.; line Z₂₍₃₎, Z₁₍₃₎, Z₁₍₂₎, resp., via Y6₂₍₃₎; Y6₁₍₃₎; Y6₁₍₂₎; resp.) of the second preswitching-device of the partial installations (y_{-1(+1,+2)}, y_{-2(+1,+2)}, y_{-2(-1,+2)}, y_{-2(-1,+1)}, resp.; Y₂₍₃₎, Y₁₍₃₎, Y₁₍₂₎, resp.) of the second memorising installation, which are different from the partial installation (y₋₂, y₋₁, y₊₁, y₊₂, resp.; Y₁, Y₂, Y₃, resp.) of the second memorising installation.

10. Arrangement according to claim 9 for performing the process according to claim 4, **characterised in that** the output of a switching-device (for example: y4₋₂, y$\frac{\text{-1(+1,+2)}}{\text{-2}}$; y4₋₁, y$\frac{\text{-2(+1,+2)}}{\text{-1}}$, y4₊₁. y$\frac{\text{-2(-1,+2)}}{\text{+1}}$; resp.; Y4₁, Y4₂, Y4₃) for logical AND whose input-side (for example: y$\frac{\text{-1(+1,+2)}}{\text{-2}}$, y$\frac{\text{-2(+1,+2)}}{\text{-1}}$, y$\frac{\text{-2(-1,+2)}}{\text{+1}}$, resp.; line Y1₁, Y1₂, Y1₃, resp.) the output (y4₋₂, y4₋₁, y4₊₁, y4₊₂, resp.; line Y1₁, Y1₂, Y1₃, resp.) of any of the partial installations (y₋₂, y₋₁, y₊₁, y₊₂, resp.; Y₁, Y₂, Y₃, resp.) of the second memorising installation is connected for and the cancelling-variables which are conducted to the second preswitching-device (for example: y$\frac{\text{-1(+1,+2)}}{\text{-2}}$, y$\frac{\text{-2(+1,+2)}}{\text{-1}}$, y$\frac{\text{-2(-1,+2)}}{\text{+1}}$, resp.; Y5₁, Y7₁; Y5₂, Y7₂; Y5₃, Y7₃; resp.) of this partial installation of the second memorisung installation (from y1_{-1(+1,+2)}, y1_{-2(+1,+2)}, y1_{-2(-1,+2)}, y1_{-2(-1,+1)}, resp; via Z₁, Z₂, Z₃, resp.) inversely are conducted to, is connected for a cancelling-input (x4₋₂, x4₋₁, x4₊₁, x4₊₂; resp.; line X4₁, X4₂, X4₃, resp.) of the partial installation (x₋₂, x3₋₂; x₋₁, x3₋₁; x₊₁, x3₊₁; x₊₂, x3₊₂; resp.; X₁, X₂, X₃, resp.) of the first memorising installation associated to this partial installation of the second memorising installation.

11. Arrangement according to clai.m 8 for performing the process according to claim 6, wherein the partial output-side (x1₊₁, for exmple; line X3₀, x3₁, X3₂, X3₃, resp.) of each partial installation of the first memorising installation is connected for an input (for instance: x2₋₂, x2₋₁, x₀, x2₊₂, resp.; X2₁, X2₂, X2₃; X2₀, X2₂, X2₃; X2₀, X2₁, X2₃; X2₀, X2₁, X2₂; resp.) to block charging of the partial installations of the first memorising installation, which are different from the partial installation of the first memorising installation, **characterised in that** the partial ouput-side (y4₋₂, y4₋₁, y4₊₁, y4₊₂, resp.; line Y1₁, via Y4₁; Y1₂, Y4₂; Y1₃, Y4₃; rep.) of each partial installation of the second memorising installation is connected for a cancelling-input (x4₋₂, x4₋₁, x4₊₁, x4₊₂, resp.; X4₁, X4₂, X4₃, resp.) of the associated partial installation (x₋₂, x3₋₂; x₋₁, x3₋₁; x₊₁, x3₊₁; x₊₂, x3₊₂; resp.; X₁, X₂, X₃, resp.) of the first memorising installation.

## Revendications

1. Procédé pour commutation de l'état présent à un état à arranger d'un appareil avec plusieurs états arrangables, pour l'arrangement desquels respectivement le statut logique au côté de sortie (x1₋₂, x1₋₁, x1₀, x1₊₁, x1₊₂, x3₋₂, x3₋₁, x3₊₁, x3₊₂; X1₀, X1₁, X1₂, X1₃, X3₀, X3₁, X3₂, X3₃) d'une première installation mémorisante (x₋₂, x₋₁, x₀, x₊₁, x₊₂, x3₋₂, x3₋₁, x3₀, x3₊₁, x3₊₂; X₀, X₁, X₂, X₃) est changé ainsi que celui après le changement correspond à l'état à arranger, **caractérisé en ce que** au changement du statut logique au côté de sortie (x1₋₂, x1₋₁, x1₀, x1₊₁, x1₊₂, x3₋₂, x3₋₁ x3₊₁, x3₊₂; X1₀, X1₁, X1₂, X1₃, X3₀, X3₁, X3₂, X3₃) de la première installation mémorisante (x₋₂, x₋₁, x₀, x₊₁, x₊₂, x3₋₂, x3₋₁, x3₀, x3₊₁, x3₊₂; X₀, X₁, X₂, X₃) le statut logique au côté de sortie (y1₋₂, y1₋₁, y1₊₁, y1₊₂, y4₋₂, y4₋₁, y4₊₁, y4₊₂; Y1₁, Y1₂, Y1₃) d'une seconde installation mémorisante (y₋₂, y₋₁, y₊₁, y₊₂; Y₁, Y₂, Y₃) est retenu inchangé et celui correspond à l'état présent.

2. Procédé selon la revendication 1 pour mise en circuit, où une installation partièlle associée à l'état à arranger (x₋₂, x3₋₂; x₋₁ x3₋₁; x₊₁, x3₊₁; x₊₂, x3₊₂, resp.; X₁, X₂, X₃, resp.) de la première installation mémorisante est chargée, **caractérisé en ce que** le chargement d'une installation partièlle associée à l'état à arranger (y₋₂, y₋₁, y₊₁, y₊₂, resp.; Y₁, Y₂, Y₃, resp.) de la seconde installation mémorisante est activé et après l'arrangement de l'état à arranger celle est chargée.

3. Procédé selon la revendication 2 pour changement de circuit, **caractérisé en ce que** d'annuler l'installation partièlle associée à l'état à arranger (y₋₂, y₋₁, y₊₁, y₊₂, resp.; Y₁, Y₂, Y₃, resp.) de la seconde installation mémorisante est neutralisé et l'installation partièlle associée à l'état ne pas présent encore (y_{-1(+1,+2)}, y_{-2(+1,+2)}, y_{-2(-1,+2}, y_{-2(-1,+1}, resp.; Y₂₍₃₎, Y₁₍₃₎, Y₁₍₂₎, resp.) de la seconde installation mémorisante est annulée après de charger l'installation partielle associée à l'état étant arrangé (y₋₂, y₋₁, y₊₁, y₊₂, resp.; Y₁, Y₂, Y₃, resp.) de la seconde installation mémorisante.

4. Procédé selon la revendication 3, **caractérisé en ce que** l'installation partièlle associée à l'état étant arrangé (x₋₂, x3₋₂; x₋₁, x3₋₁; x₊₁, x3₊₁; x₊₂, x3₊₂; resp.; X₁; X₂; X₃; resp.) de la première installation mémorisante est annulée après d'annuler l'installation partièlle associée à l'état ne pas présent encore (y_{-1(+1,+2)}, y_{-2(+1,+2)}, y_{-2(-1,+2)}, y_{-2(-1,+1)}, resp.; Y₂₍₃₎, Y₁₍₃₎, Y₁₍₂₎, resp.) de la seconde installation mémorisante.

5. Procédé selon la revendication 1 pour mise hors circuit, **caractérisé en ce qu'**une installation partielle associée à l'arrêt (x₀, x3₀; X₀) de la première installation mémorisante est est chargée et une installation partièlle associée à l'état ne pas présent encore (y_{-2(-1,+1,+2)}; Y_{1(2,3)}) de la seconde installation mémorisante est annulée après l'arrangement de l'arrêt.

6. Procédé selon la revendication 2, où le chargement est bloqué d'installations partièlles (x₋₁, x3₋₁ | x₀, x3₀ | x₊₁, x3₊₁ | x₊₂, x3₊₂ ; x₋₂, x3₋₂ | x₀, x3₀ | x₊₁, x3₊₁ | x₊₂, x3₊₂; x₋₂, x3₋₂ | x₋₁, x3₋₁ | x₀, x3₀ | x₊₂, x3₊₂ ; x₋₂, x3₋₂ | x₋₁, x3₋₁ | x₀, x3₀ | x₊₁, x3₊₁; resp.; X0, X₂, X₃; X₀, X₁, X₃; X₀, X₁, X₂; resp.), de la première installation mémorisante, qui sont différentes de l'installation partièlle (x₋₂, x3₋₂; x₋₁, x3₋₁; x₊₁, x3₊₁; x₊₂, x3₊₂; resp; X₁; X₂; X₃; resp.) associée a l'état à arranger de la première installation mémorisante, **caractérisé en ce que** l'installation partièlle (x₋₂, x3₋₂; x₋₁, x3₋₁; x₊₁, x3₊₁; x₊₂, x3₊₂; resp.; X₁; X₂; X₃; resp.) associée à l'état étant arrangé, de la première installation mémorisante, est annulée après le chargement de l'installation partielle (y₋₂, y₋₁, y₊₁, y₊₂, resp.; Y₁, Y₂, Y₃, resp.) associée à l'état etant arrangé, de la seconde installation mémorisante.

7. Procédé selon la revendication 5, où est bloqué le chargement d'installations partièlles (x₋₂, x3₋₂ | x₋₁, x3₋₁ | x₊₁, x3₊₁ | x₊₂, x3₊₂; X₁, X₂, X₃), de la première installation mémorisante, qui sont différentes de l'installation partièlle (x₀, x3₀; X₀) associée à l'arrêt, de la première installation mémorisante, **caractérisé en ce que** l'installation partièlle associée à l'arrêt (x₀, x3₀; X₀), de la premère installation mémorisante, est annulée après l'arrangement de l'arrêt.

8. Dispositif pour mise en oeuvre le procédé selon la revendication 2 avec une première installation mémorisante (x₂, x₋₁, x₀, x₊₁, x₊₂, x3₋₂, x3₋₁, x3₀, x3₊₁, x3₊₂; X₀, X₁, X₂, X₃) avec un côté de sortie (x1₋₂, x1₋₁, x1₀, x1₊₁, x1₊₂, x3₋₂, x3₋₁, x3₊₁, x3₊₂; lignes X1₀, X1₁, X1₂, X1₃, X3₀, X3₁, X3₂, X3₃) et plusieurs installations partièlles (x₋₂, x3₋₂; x₋₁, x3₋₁; x₀, x3₀; x₊₁, x3₊₁; x₊₂, x3₊₂; resp.; X₀; X₁; X₂; X₃; resp.), chaqune avec un côté de sortie partiel (x1₋₂, x3₋₂; x1₋₁, x3₋₁; x1₀; x1₊₁, x3₊₁; x1₊₂, x3₊₂; resp.; lignes X1₀, X3₀; X1₁, X3₁; x1₊₂, X3₂; X1₃, X3₃; resp.), **caractérisé par** une seconde installation mémorisante (y₋₂, y₋₁, y₊₁, y₊₂; Y₁, Y₂, Y₃) avec un côté de sortie (y1₋₂, y1₋₁, y1₊₁, y1₊₂, y4₋₂, y4₋₁, y4₊₁, y4₊₂; lignes Y1₁, Y1₂, Y1₃) et plusieurs installations partièlles (y₋₂, y₋₁, y₊₁, y₊₂, resp.; Y₁, Y₂, Y₃, resp.), chaqune avec un côté de sortie partiel (y1₋₂, y4₋₂; y1₋₁, y4₋₁; y1₊₁, y4₊₁; y1₊₂, y4₊₂; resp.; ligne Y1₁; Y1₂; Y1₃; resp.) et chaqune avec une première installation de précommutation (y2₋₂, y3₋₂; y2₋₁, par exemple: y6₋₁; y2₊₁, par exemple: y3₊₁; y3₊₂; resp.; Y2₁; Y2₂; Y2₃; resp.) avec une ou plusieurs entrées pour variables de chargement (y3₋₂, par exemple: y6₋₁, par exemple: y3₊₁, y3₊₂; ligne Y3₁, Y3₂, Y3₃, resp.) et une entrée pour une variable à activer les variables de chargement (y2₋₂, y2₋₁, y2₊₁, y2₊₂, resp.; ligne X1₁, X1₂, X1₃, resp.), où à chacune des installations partielles (y₋₂, y₋₁, y₊₁, y₊₂; resp.; Y₁, Y₂, Y₃, resp.) de la seconde installation mémorisante une installation partielle (x₋₂, x3₋₂; x₋₁, x3₋₁; x₊₁, x3₊₁; x₊₂, x3₊₂; resp.; X₁, X₂, X₃, resp.) de la première installation mémorisante est associée et où vers l'entrée (y2₋₂, y2₋₁, y2₊₁, y2₊₂, resp.; ligne X1₁, X1₂, X1₃, resp.) pour la variable à activer les variables de chargement de la première installation de précommutation de chacune des installations partielles (y₋₂, y₋₁, y₊₁, y₊₂,; resp.; Y₁, Y₂, Y₃, resp.) de la seconde installation mémorisante est liée le côté de sortie partiel (x3₋₂, x3₋₁, x3₊₁, x3₊₂, resp.; X1₁, X1₂, X1₃, resp.) de l'installation partielle (x₋₂, x3₋₂; x₁, x3₋₁; x₊₁, x3₊₁; x₊₂, x3₊₂; resp.; X₁, X₂, X₃, resp.) de la première installation mémorisante associée à l'installation partielle (y₋₂, y₋₁, y₊₁, y₊₂, resp.; Y₁, Y₂, Y₃, resp.) de la seconde installation mémorisante.

9. Dispositif selon la revendication 8 pour mise en oeuvre le procédé selon la revendication 3, **caractérisé par** une seconde installation de précommutation (par exemple: y$\frac{\text{-1(+1,+2)}}{\text{-2}}$; y5₋₂ y$\frac{\text{-2(+1,+2)}}{\text{-1}}$, y5₋₁; y$\frac{\text{-2(-1,+2)}}{\text{+1}}$, y5₊₁; resp.; Y5₁, Y7₁; y5₂, Y7₂; Y5₃, Y7₃; resp.) de chacune des installations partièlles (y₋₂, y₋₁, y₊₁, y₊₂, resp.; Y₁, Y₂, Y₃) de la seconde installation mémorisante avec une ou plusieurs entrées (par exemple: y$\frac{\text{-1(+1,+2)}}{\text{-2}}$, y$\frac{\text{-2(+1,+2)}}{\text{-1}}$, y$\frac{\text{-2(-1,+2)}}{\text{+1}}$, resp.; ligne Z₁, Z₂, Z₃, resp.) pour variables d'annulation et une entrée (y5₋₂, y5₋₁, y5₊₁, y5₊₂, resp.; ligne X3₁, X3₂, X3₃, resp.) pour une variable à neutraliser les variables d'annulation, où le côté de sortie partiel de l'installation partièlle de la première installation mémorisante qui est associée à l'installation partièlle de la seconde installation mémorisante est lié vers l'entrée pour la variable à neutraliser les variables d'annulation et en ce que le côté de sortie partiel (y1₋₂, y1₋₁, y1₊₁, y1₊₂, resp.; line Y1₁, Y12, Y1₃, resp.) de chacune des installations partièlles (y₋₂,y₋₁, y_{+1,y+2}; Y₁, Y₂, Y₃) de la seconde installation mémorisante est liée vers une entrée pour la variable d'annulation (par exemple: tel que y$\frac{\text{-2}}{\text{-1(+1)}}$, tel que y$\frac{\text{-1}}{\text{-2(+1)}}$, tel que y$\frac{\text{+1}}{\text{-2(-1)}}$, resp.; ligne Z₂₍₃₎, Z₁₍₃₎, Z₁₍₂₎, resp.; via Y6₂₍₃₎; Y6₁₍₃₎; Y6₍₁₍₂₎; resp.) de la seconde installation de précommutation des installations partièlles (y_{-1(+1,+2)}, y_{-2(+1,+2)}, y_{-2(-1,+2)}, y_{-2(-1,+1)}; Y₂₍₃₎, Y₁₍₃₎, Y₁₍₂₎, resp.), qui sont différentes de l'installation partielle (y₋₂, y₋₁, y₊₁, y₊₂; resp.; Y₁, Y₂, Y₃, resp.) de la seconde installation mémorisante, de la seconde installation mémorisante.

10. Dispositif selon la revendication 9 pour mise en oeuvre le procédé selon la revendication 4, **caractérisé en ce que** la sortie d'un arrangement de commutation ET logique (par exemple: y4₋₂, y$\frac{\text{-1(+1,+2)}}{\text{-2}}$; y4₋₁, y$\frac{\text{-2(+1,+2)}}{\text{-1}}$; y4₊₁, y$\frac{\text{-2(-1,+2)}}{\text{+1}}$ resp.; Y4₁, Y4₂, Y4₃, resp.), vers le côté d'etrée duquel (par exemple: y$\frac{\text{-1(+1,+2)}}{\text{-2}}$, y$\frac{\text{-2(+1,+2)}}{\text{-1}}$, y$\frac{\text{-2(-1,+2)}}{\text{+1}}$; ligne Y1₁, Y1₂, Y1₃, resp.) est liée la sortie (y4₋₂, y4₋₁, y4₊₁, y4₊₂, resp.; ligne Y1₁, Y1₂, Y1₃, resp.) de quelconque des installations partièlles (y₋₂, y₋₁, y₊₁, y₊₂, resp.; Y₁, Y₂, Y₃, resp.) de la seconde installation mémorisante et au côté d'entrée duquel inversement sont menées les variables d'annulation qui sont menées à la seconde installation de précommutation (par exemple: y$\frac{\text{-1(+1,+2)}}{\text{-2}}$, y$\frac{\text{-2(+1,+2)}}{\text{-1}}$, y$\frac{\text{-2(-1,+2)}}{\text{+1}}$, resp.; Y5₁, Y7₁; Y5₂, Y7₂; Y5₃, Y7₃; resp.) de cette installation partièlle de la seconde installation mémorisante (de y1_{-1(+1,+2)}, y1_{-2(+1,+2)}, y1_{-2(1,+2)}, y1_{-2(-1,+1)}, resp.; via Z₁, Z₂, Z₃, resp.), est lié vers une entrée d'annulation (x4₋₂, x4₋₁, x4₊₁, x4₊₂, resp.; ligne X4₁, X4₂, X4₃, resp.) de l'installation partièlle (x₋₂, x3₋₂; x₋₁, x3₋₁; x₊₁, x3₊₁; x₊₂, x3₊₂; resp.; X₁, X₂, X₃, resp.) de la première installation mémorisante associée à cette installation partielle de la seconde installaton mèmorisante.

11. Dispositif selon la revendication 8 pour mise en oeuvre le procédé selon la revendication 6, où le côté de sortie partiel (par exemple: x1₊₁; ligne X3₀, X3₁, X3₂, X3₃, resp.) de chacune des installations partielles (x₋₂, x₋₁, x₀, x₊₁, x₊₂, resp.; X₀, X₁, X₂, X₃, resp.) de la première installation mémorisante est lié à une entrée (tel que: x2₋₂, x2₋₁, x2₀, x2₊₂; X2₁, X2₂, X2₃; X2₀, X2₂, X2₃; X2₀, X2₁, X2₃; X2₀, X2₁, X2₂; resp.) à bloquer le chargement des installations partièlles de la première installation mémorisante, qui sont différentes de l'installation partièlle de la première installation mémorisante, **caractérisé en ce que** les côtés de sortie partiels (y4₋₂, y4₋₁, y4₊₁, y4₊₂ resp.; Y4₁, Y4₂, Y4₃ resp.) des installations partièlles (y₋₂, y₋₁, y₊₁, y₊₂, resp.; Y₁, Y₂, Y₃, resp.) de la seconde installation mémorisante sont liés à une entrée d'annulation (x4₋₂, x4₋₁, x4₊₁, x4₊₂, resp.: X4₁, X4₂, X4₃, resp.) de l'installation partèlle associée (x₋₂, x3₋₂; x₋₁, x3₋₁; x₊₁, x3₊₁; x₊₂, x3₊₂; resp.; X₁, X₂, X₃, resp.) de la première installation mémorisante.
